(19) Europäisches Patentamt
European Patent Office
Office européen des brevets

(11) **EP 4 527 653 A1**

(12) **EUROPEAN PATENT APPLICATION**
published in accordance with Art. 153(4) EPC

(43) Date of publication:
26.03.2025 Bulletin 2025/13

(21) Application number: 23831347.2

(22) Date of filing: 26.06.2023

(51) International Patent Classification (IPC):
**B60K 1/00** *(2006.01)* **B60K 15/063** *(2006.01)*
**B60K 15/07** *(2006.01)*

(52) Cooperative Patent Classification (CPC):
**B60K 1/00; B60K 15/063; B60K 15/07**

(86) International application number:
**PCT/JP2023/023482**

(87) International publication number:
**WO 2024/004905 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.06.2022 JP 2022103768

(71) Applicant: Kubota Corporation
Osaka 556-8601 (JP)

(72) Inventors:
• **TAKAKI, Takahiro**
**Sakai-shi, Osaka 590-0908 (JP)**

• **TAKAKI, Go**
**Sakai-shi, Osaka 590-0908 (JP)**
• **IWAMI, Kenichi**
**Sakai-shi, Osaka 590-0908 (JP)**
• **SAKANO, Tomoyoshi**
**Sakai-shi, Osaka 590-0908 (JP)**
• **MINAMIDE, Yuki**
**Sakai-shi, Osaka 590-0908 (JP)**
• **AMITANI, Kodai**
**Sakai-shi, Osaka 590-0908 (JP)**
• **HAYASHI, Yosuke**
**Sakai-shi, Osaka 590-0908 (JP)**

(74) Representative: **Cabinet Beau de Loménie
158, rue de l'Université
75340 Paris Cedex 07 (FR)**

(54) **WORK VEHICLE**

(57) A work vehicle includes a fuel cell, at least one fuel tank to store fuel to be supplied to the fuel cell, a motor connected to the fuel cell, a vehicle frame supporting the fuel cell, the fuel tank, and the motor, the vehicle frame rotatably supporting front and rear wheels, at least one enclosure housing the fuel cell and the fuel tank, and at least one fuel gas sensor inside the enclosure.

FIG.9A

EP 4 527 653 A1

**Description**

**TECHNICAL FIELD**

The present disclosure relates to work vehicles each includes an electric motor and a fuel cell.

**BACKGROUND ART**

In the field of motor vehicles, where the main purpose is to transport "people" or "objects," electric vehicles (EVs) are becoming increasingly popular. In these vehicles, the driving force (traction) is generated by an electric motor (hereinafter referred to as "motor") instead of an internal combustion engine.

On the other hand, there is a need to reduce the amount of carbon dioxide ($CO_2$) emitted by work vehicles, such as tractors used in agricultural fields, to realize a decarbonized society. Unlike typical automobiles, work vehicles such as tractors need to tow implements, which are work machines, to perform agricultural tasks such as plowing. Therefore, to achieve the electrification of work vehicles, there are issues to be solved that differ from those of passenger cars.

Patent Document 1 discloses a tractor that includes a fuel cell (FC) power generation system and a motor, while maintaining the structure of a conventional engine-driven tractor with minimal alteration.

**CITATION LIST**

**PATENT LITERATURE**

[Patent Document 1] Japanese Laid-Open Patent Publication No. 2002-225577

**SUMMARY OF INVENTION**

**TECHNICAL PROBLEM**

To realize a power generation system for work vehicles using fuel cells, it is necessary to have various components in addition to a fuel tank for storing fuel. However, work vehicles, unlike typical automobiles, have mechanical structures for towing, lifting, or rotating implements. Therefore, it is problematic to adopt the fuel cell power generation system configuration used in conventional electric vehicles "as is" for work vehicles.

This disclosure provides work vehicles each capable of solving one or more of such problems.

**SOLUTION TO PROBLEM**

A work vehicle according to the present disclosure, in an exemplary and non-limiting example embodiment, includes a fuel cell, at least one fuel tank to store fuel to be supplied to the fuel cell, a motor connected to the fuel cell, a vehicle frame supporting the fuel cell, the fuel tank, and the motor, the vehicle frame rotatably supporting front and rear wheels, at least one enclosure housing the fuel cell and the fuel tank, and at least one fuel gas sensor inside the enclosure.

**ADVANTAGEOUS EFFECTS OF INVENTION**

According to example embodiments of the present disclosure, when fuel gas leaks from a fuel cell or a fuel tank, an enclosure controls dispersion of the fuel gas into the atmosphere and facilitates detection.

**BRIEF DESCRIPTION OF DRAWINGS**

[FIG. 1] A plan view schematically showing a basic configuration example of a work vehicle according to the present disclosure.

[FIG. 2] A diagram showing a basic configuration example of a fuel cell power generation system mounted on the work vehicle.

[FIG. 3] A block diagram schematically showing an example of electrical connections and power transmission between components of the work vehicle according to the present disclosure.

[FIG. 4] A block diagram schematically showing paths of electrical signals (solid thin lines) and coolant paths (dotted lines) between components of a work vehicle according to the present disclosure.

[FIG. 5] A side view schematically showing a configuration example of a work vehicle according to an embodiment of the present disclosure.

[FIG. 6A] A side view schematically showing an example of the arrangement relationship of major portions in the work vehicle according to the embodiment of the present disclosure.

[FIG. 6B] A plan view schematically showing an example of the arrangement relationship of major portions in the work vehicle according to the embodiment of the present disclosure.

[FIG. 7] A diagram schematically showing a mechanism supporting the fuel tank in the embodiment of the present disclosure.

[FIG. 8] A diagram schematically showing a configuration example of the fuel tank module in the embodiment of the present disclosure.

[FIG. 9A] A diagram schematically showing an arrangement of a fuel gas sensor within a front housing and a tank case in the embodiment of the present disclosure.

[FIG. 9B] A diagram schematically showing an arrangement example of a first sensor inside a front housing in the embodiment of the present disclosure.

[FIG. 10] A side view schematically showing an arrangement example of the radiator device in the embodiment of the present disclosure.

[FIG. 11] A plan view schematically showing an arrangement example of the radiator device in the embodiment of the present disclosure.

[FIG. 12] A perspective view of an agricultural tractor according to the embodiment (hereinafter referred to as "this embodiment") of the present disclosure.

[FIG. 13] A side view of the agricultural tractor according to this embodiment.

[FIG. 14] A plan view of the agricultural tractor according to this embodiment.

[FIG. 15] A front view of the agricultural tractor according to this embodiment.

[FIG. 16] A rear view of the agricultural tractor according to this embodiment.

[FIG. 17] A side view of the agricultural tractor with a front housing in an open state according to this embodiment.

[FIG. 18] A side view of the agricultural tractor with a front housing in an open state in a modified example.

[FIG. 19] A side view schematically showing the movable range of the movable housing portion in an embodiment where a rotation axis is located at a front of the movable housing portion.

[FIG. 20] A side view schematically showing a movable range of a movable housing portion in an embodiment where a rotation axis is located at a rear of the movable housing portion.

[FIG. 21] A perspective view of a fixed housing portion according to this embodiment.

[FIG. 22] A side view of a fixed housing portion according to this embodiment.

[FIG. 23] A diagram showing an arrangement relationship between a fixed housing portion and a handle stay cover according to this embodiment.

[FIG. 24] A perspective view showing an arrangement of an inverter device according to this embodiment.

[FIG. 25] A perspective view showing an arrangement relationship between an inverter device and a transmission case according to this embodiment.

[FIG. 26] A rear view showing an arrangement relationship between an inverter device and a transmission case according to this embodiment.

[FIG. 27] A top view showing an arrangement relationship between an inverter device and a transmission case according to this embodiment.

[FIG. 28] A side view showing an electrical circuit module according to this embodiment.

[FIG. 29] A diagram schematically showing the configuration of an electrical circuit module according to this embodiment.

## DESCRIPTION OF EMBODIMENTS

The following describes embodiments of the present disclosure. However, excessively detailed explanations may be omitted. For example, detailed explanations of well-known matters and repetitive explanations of substantially identical configurations may be omitted. This is to avoid the following description from becoming unnecessarily redundant and to facilitate understanding by those skilled in the art. The inventors provide the attached drawings and the following description to enable those skilled in the art to fully understand this disclosure, and do not intend to limit the subject matter described in the claims by these drawing and description. In the following description, the same reference numerals are used for components with the same or similar functions.

The following embodiments are illustrative and not limiting. The technologies disclosed herein are not restricted to the following embodiments. For instance, the numerical values, shapes, materials, steps, the order of those steps, screen layouts, and other elements shown in the following embodiments are merely examples. Various modifications can be made as long as no technical contradictions arise. Additionally, different features, elements, characteristics, etc., of the example embodiments may be combined as long as there are no technical contradictions.

In this disclosure, the term "work vehicle" refers to a vehicle used to perform a task at a work site. A "work site" includes any place where work is carried out, such as a field, forest, or construction site. A "field" refers to any place where agricultural work is performed, such as an orchard, farm, paddy field, grain farm, or pasture. A work vehicle may include an agricultural machine such as a tractor, rice planter, combine harvester, riding field management vehicle, or riding mower, as well as a non-agricultural vehicle such as a construction work vehicle or snowplow. The work vehicles described in this disclosure may be equipped with an implement (also called a "work machine" or "work device") attached to at least one of its front and rear portions, depending on the nature of the work. Travel of a work vehicle while performing a task may be referred to as "tasked travel."

An "agricultural machine" refers to a machine for agricultural application. Examples of agricultural machines include tractors, harvesters, rice planters, riding field management vehicles, vegetable transplanters, mowers, seeders, spreaders, and agricultural mobile robots. Not only may a work vehicle such as a tractor function as an "agricultural machine" on its own, but also the entire combination of a work vehicle and an implement attached to or towed by the work vehicle may function as an "agricultural machine." An agricultural machine performs agricultural work on the ground in a field, such as tilling, seeding, pest control, fertilizing, planting crops, or harvesting.

## 1. <Basic Configuration of Work Vehicle>

Before explaining specific embodiments of the work vehicles in this disclosure, an example of the basic configuration and operation of the work vehicle will be described. Each of the work vehicles described below includes a motor and a fuel cell power generation system (hereinafter referred to as "FC power generation system") configured to generate the power necessary to drive the motor.

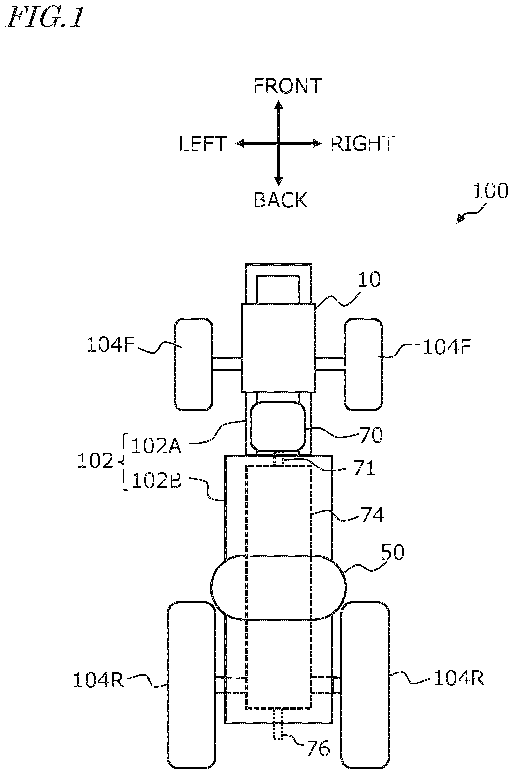

FIG. **1** is a schematic plan view showing an example of the basic configuration of a work vehicle **100** in this disclosure. In this disclosure, the direction in which the work vehicle **100** travels straight forward is called the "forward direction," and the direction in which it travels straight backward is called the "backward direction." In a plane parallel to the ground, the direction extending perpendicularly to the right of the "forward direction" is called the "right direction," and the direction extending perpendicularly to the left is called the "left direction." In FIG. **1,** the "forward direction," "backward direction," "right direction," and "left direction" are indicated by arrows labeled "front," "back," "right," and "left" respectively. Both the forward and backward directions may be collectively referred to as the "front-back direction," and both the right and left directions may be collectively referred to as the "width direction."

The work vehicle **100** illustrated in this example is, for instance, a tractor, which defines and functions as an example of agricultural machinery. The technologies disclosed herein are not limited to work vehicles such as tractors and may be applied to other types of work vehicles. The work vehicle **100** is configured to attach or tow an implement and travel within a field while performing agricultural tasks appropriate to the type of implement. Additionally, the work vehicle **100** is configured to travel both within and outside the field (including on roads) with the implement raised or without an implement attached.

The work vehicle **100,** like a conventional tractor, includes a vehicle frame **102** that rotatably supports left and right front wheels **104F** and left and right rear wheels **104R.** The vehicle frame **102** includes a front frame **102A,** where the front wheels **104F** are mounted, and a transmission case **102B,** where the rear wheels **104R** are mounted. The front frame **102A** is fixed to the front portion of the transmission case **102B.** The front wheels **104F** and rear wheels **104R** may be collectively referred to as wheels **104.** Strictly speaking, the wheels **104** refer to wheel rims with tires attached. In this disclosure, the term "wheel" generally refers to the entire assembly of the "wheel rim and tire." Either or both of the front wheels **104F** and rear wheels **104R** may be replaced with a plurality of wheels (crawlers) fitted with endless tracks instead of wheeled tires.

In the example shown in FIG. **1,** the work vehicle **100** includes a fuel cell module (FC module) **10** and a motor **70,** which are directly or indirectly supported by the front frame **102A.** The FC module **10** includes a fuel cell stack (FC stack) and functions as an onboard power generator that generates electricity from fuel, as will be described later. Hereinafter, the terms "FC module" or "FC stack" may simply be referred to as "fuel cell."

The motor **70** is electrically connected to the FC module **10.** The motor **70** converts the electric power generated by the FC module **10** into mechanical motion (power) to produce the driving force (traction) necessary for the work vehicle **100** to travel. An example of the motor **70** is an AC synchronous motor. Since the FC stack of the FC module **10** generates direct current, when the motor **70** is an AC synchronous motor, a group of electrical circuits, including an inverter device, is installed between the FC stack and the motor **70** to convert the direct current to alternating current. A portion of such electrical circuit group may be inside the FC module **10,** while another portion of the electrical circuit group may be attached to the motor **70** as a motor drive circuit.

The motor **70** includes an output shaft **71** that rotates. The torque of the output shaft **71** is transmitted to the rear wheels **104R** through mechanical parts such as a transmission (gearbox) and a rear wheel differential gear device installed inside the transmission case **102B.** In other words, the power generated by the motor **70,** which defines and functions as the power source, is transmitted to the rear wheels **104R** through a power transmission system (drivetrain) **74,** including the transmission installed in the transmission case **102B.** For this reason, the "transmission case" may also be referred to as a "mission case." In four-wheel drive mode, a portion of the power of the motor **70** is also transmitted to the front wheels **104F.** The power of the motor **70** may be used not only to drive the work vehicle **100** but also to operate implements. Specifically, a power take-off (PTO) shaft **76** is provided at the rear end of the transmission case **102B,** and the torque from the output shaft **71** of the motor **70** is transmitted to the PTO shaft **76.** Implements attached to or towed by the work vehicle **100** is configured to receive power from the PTO shaft **76** to perform various work-related operations. The motor **70** and the power transmission system **74** may collectively be referred to as an electric powertrain.

Thus, the work vehicle **100** disclosed herein does not include an internal combustion engine such as a diesel engine, but includes the FC module **10** and the motor **70.** Additionally, the output shaft **71** of the motor **70** is mechanically coupled to the power transmission system **74,** including the transmission in the transmission case **102B.** The motor **70** efficiently generates torque over a relatively wide range of rotational speeds compared to an internal combustion engine. However, by utilizing the power transmission system **74,** including the transmission, it becomes easier to adjust the torque and rotational speed from the motor **70** over an even wider range by performing multi-stage or continuously variable speed change operations. This configuration allows for efficient execution of not only the travel of the work vehicle **100** but also various operations using implements.

Depending on the application or size of the work vehicle **100,** some functions of the power transmission system **74** may be omitted. For example, a portion or an entirety of the transmission responsible for speed change functions may be omitted. The number and mounting position of motors **70** are also not limited to the example shown in FIG. **1.**

The work vehicle **100** includes at least one fuel tank **50** that stores fuel to be supplied to the FC module **10.** For simplicity, FIG. **1** shows one fuel tank **50.** In some embodiments, a plurality of fuel tanks **50** may be housed in a tank case to define a fuel tank module. The fuel tank **50** is supported by structural elements fixed to the vehicle frame **102A** described later. The FC module **10** and the fuel tank **50** are connected by piping and open/close valves, and similar components, defining an FC power generation system mounted on a vehicle. The configuration and operation of the FC power generation system will be described later.

The work vehicle **100** in the embodiments described later includes a seat for a driver, hereinafter referred to as "a driver seat," supported by the vehicle frame **102.** The driver seat may be enclosed by a cabin supported by the vehicle frame **102.** In the embodiments described later, the FC module **10** is positioned in front of the driver seat, and the fuel tank **50** is positioned above the driver seat. Such FC module **10** and fuel tank **50** are housed in at least one "enclosure." The "enclosure" functions as a housing, for example, and plays a role in protecting the FC module **10** and fuel tank **50** from sunlight exposure and wind and rain. Additionally, such an enclosure is designed to control the spread of fuel gas into the atmosphere and to facilitate the detection of fuel gas when fuel gas leaks from the FC module **10** or fuel tank **50.**

The FC module **10** may be housed in a front housing called a "bonnet," for example. The front housing is a portion of the "enclosure." The front housing is supported by the front portion of the vehicle frame **102** (front frame **102A).** The fuel tank **50** is housed in a tank case, as mentioned earlier. The tank case is directly or indirectly supported by the vehicle frame **102.**

## 2. <FC Power Generation System>

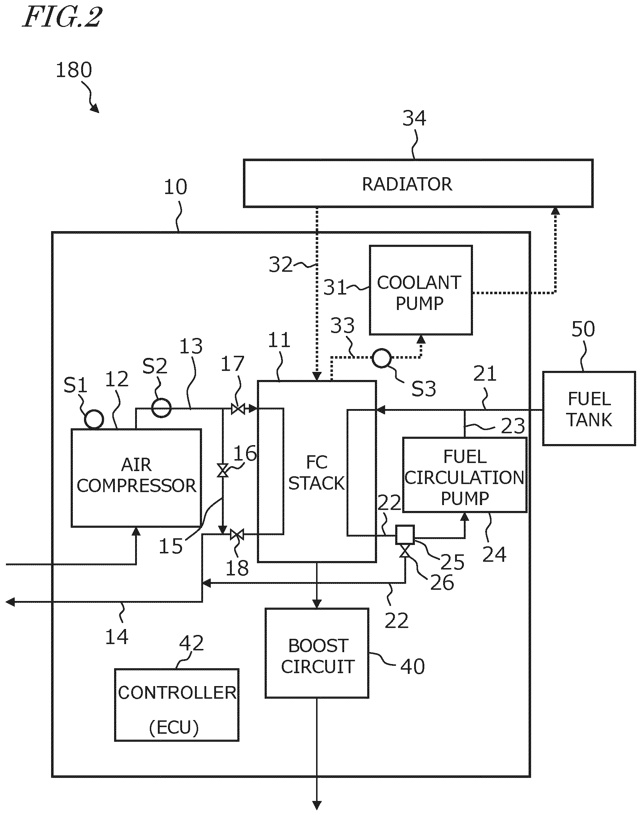

Next, referring to FIG. **2,** a basic configuration example of the FC power generation system **180** mounted on the work vehicle **100** will be explained.

The FC power generation system **180** shown in FIG. **2** functions as an onboard power generation system in the work vehicle **100** of FIG. **1.** The electric power generated by the FC power generation system **180** is used not only for the travel of the work vehicle **100** but also for the operation of implements towed or attached to the work vehicle **100.**

The FC power generation system **180** in the illustrated example includes the FC module **10** and at least one fuel tank **50** that stores fuel to be supplied to the FC module **10.** The FC power generation system **180** also includes a radiator device **34** for cooling the FC module **10.**

The FC module **10** includes main components such as a fuel cell stack (FC stack) **11,** an air compressor **12,** a fuel circulation pump **24,** a coolant pump **31,** a boost circuit **40,** and a control device **42.** These components are housed within the casing of the FC module **10** and are connected to each other through electrical or fluid communication.

The FC stack **11** generates electric power through an electrochemical reaction between the fuel, referred to as "anode gas" and the oxidizing gas, referred to as "cathode gas." In this example, the FC stack **11** includes polymer electrolyte fuel cells. The FC stack **11** has a stack structure in which a plurality of single cells are stacked. A single cell includes, for example, an electrolyte membrane including an ion exchange membrane, an anode electrode on one side of the electrolyte membrane, a cathode electrode on the other side of the electrolyte membrane, and a pair of separators sandwiching the anode electrode and cathode electrode on both sides. The voltage generated in a single cell is, for example, less than 1 volt. Therefore, in the FC stack **11,** for instance, more than 300 single cells are connected in series to generate a voltage of several hundred volts.

Anode gas is supplied to the anode electrode of the FC stack **11.** The anode gas is called "fuel gas" or simply "fuel." In the embodiments of this disclosure, the anode gas (fuel) is hydrogen gas. Cathode gas is supplied to the cathode electrode. The cathode gas is an oxidizing gas such as air. The anode electrode is called the fuel electrode, and the cathode electrode is called the air electrode.

At the anode electrode, the electrochemical reaction shown in the following equation (**1**) occurs.

$$2H_2 \rightarrow 4H^+ + 4e^- \ ... \ \text{equation (1)}$$

At the cathode electrode, the electrochemical reaction shown in the following equation (**2**) occurs.

$$4H^+ + 4e^- + O_2 \rightarrow 2H_2O \ ... \ \text{equation (2)}$$

Overall, the reaction shown in the following equation (**3**) occurs.

$$2H_2 + O_2 \rightarrow 2H_2O \ ... \ \text{equation (3)}$$

The anode gas after being used in the above reaction is called "anode off-gas", and the cathode gas after being used in the reaction is called "cathode off-gas."

The air compressor **12** supplies air taken from the outside as cathode gas to the cathode electrode of the FC stack **11.** The cathode gas supply system including the air compressor **12** includes a cathode gas supply pipe **13**, a cathode off-gas pipe **14,** and a bypass pipe **15**. The cathode gas supply pipe **13** flows cathode gas (air) supplied from the air compressor **12** to the cathode electrode of the FC stack **11.** The cathode off-gas pipe **14** flows cathode off-gas discharged from the FC stack **11** to the outside air. The bypass pipe **15** branches from the cathode gas supply pipe **13** downstream of the air compressor **12,** bypasses the FC stack **11,** and connects to the cathode off-gas pipe **14**. A control valve **16** is provided on the bypass pipe **15** to adjust the flow rate of cathode gas flowing through the bypass pipe **15**. A shut-off valve **17** is provided on the cathode gas supply pipe **13** to selectively block the inflow of cathode gas to the FC stack **11**. A pressure regulating valve **18** is provided on the cathode off-gas pipe **14** to adjust the back pressure of the cathode gas.

The cathode gas supply system of the FC module **10** includes a rotation speed detection sensor **S1** that detects the rotation speed of the air compressor **12** and a gas flow rate detection sensor **S2** that detects the flow rate of cathode gas flowing through the cathode gas supply pipe **13**. The control valve **16**, shut-off valve **17**, and pressure regulating valve **18** are, for example, electromagnetic valves.

The fuel circulation pump **24** supplies fuel gas (anode gas) sent from the fuel tank **50** to the anode electrode of the FC stack **11.** The anode gas supply system including the fuel circulation pump **24** includes an anode gas supply pipe **21,** an anode off-gas pipe **22,** and a circulation path **23**. The anode gas supply pipe **21** flows anode gas supplied from the fuel tank **50** to the anode electrode of the FC stack **11.** In the embodiments of this disclosure, the fuel tank **50** is a hydrogen tank that stores high-pressure hydrogen gas.

The anode off-gas pipe **22** flows anode off-gas discharged from the FC stack **11.** The anode off-gas is led through the anode off-gas pipe **22** to a gas-liquid separator **25** in which moisture is removed. The anode off-gas with moisture removed returns to the anode gas supply pipe **21** through the circulation path **23** by the fuel circulation pump **24**. The anode off-gas circulating through the circulation path **23** can be discharged through the anode off-gas pipe **22** by opening an exhaust valve **26**. Moisture accumulated in the gas-liquid separator **25** can be discharged through the anode off-gas pipe **22** by opening the exhaust valve **26**. The exhaust valve **26** is, for example, an electromagnetic valve. In the example shown in the figure, the anode off-gas pipe **22** is connected to the cathode off-gas pipe **14**. By adopting this configuration, it is possible to improve the utilization efficiency of the anode gas by circulating the anode off-gas containing unreacted anode gas that did not contribute to the electrochemical reaction and supplying it again to the FC stack **11.**

To enhance the performance of the FC stack **11,** temperature control is important. When generating electricity through the reaction of producing water from hydrogen gas and oxygen gas, heat is also generated, necessitating cooling. FIG. **2** shows a coolant circulation system including a coolant pump **31** for the FC stack **11,** but as described later, cooling circulation systems for other electrical equipment may also be provided. Note that the air compressor **12,** fuel circulation pump **24,** and coolant pump **31** included in the FC module **10** are driven by individual built-in motors. These motors are also electrical equipment.

The coolant circulation system including the coolant pump **31** shown in FIG. **2** includes a coolant supply pipe **32,** a coolant discharge pipe **33,** a radiator device **34,** and a temperature sensor **S3**. This coolant circulation system is configured to adjust the temperature of the FC stack **11** within a predetermined range by circulating coolant through the FC stack **11**. The coolant is supplied to the FC stack **11** through the coolant supply pipe **32**. The supplied coolant flows through a coolant path between single cells and is discharged into the coolant discharge pipe **33**. The coolant discharged into the coolant discharge pipe **33** flows to the radiator device **34**. The radiator device **34** performs heat exchange between the incoming coolant and the outside air to release heat from the coolant, and then resupplies the cooled coolant to the coolant supply pipe **32**.

The coolant pump **31** is provided on either the coolant supply pipe **32** or the coolant discharge pipe **33** to pump coolant to the FC stack **11**. A coolant bypass flow path may be provided between the coolant discharge pipe **33** and the coolant supply pipe **32**. In that case, a flow dividing valve is provided at the branching point at which the coolant bypass flow path branches from the coolant discharge pipe **33**. The flow dividing valve is configured to adjust the flow rate of coolant flowing through the bypass flow path. The temperature sensor **S3** detects the temperature of the coolant flowing through the coolant discharge pipe **33**.

The coolant used to cool the FC stack **11** is circulated through the flow path by an electric coolant pump **31**. A coolant control valve may be provided downstream of the FC stack **11**. The coolant control valve adjusts the ratio of coolant flowing to the radiator device **34** and coolant bypassing the radiator device **34**, enabling more accurate control of the coolant temperature. Furthermore, by controlling the liquid delivery amount by the coolant pump, it is also possible to control the coolant temperature difference between the inlet and outlet of the FC stack **11** to be within a desired range. The temperature of the coolant in the FC stack **11** may be controlled to be around 70°C, for example, which is a temperature where the power generation efficiency of the FC stack **11** is high.

The coolant flowing through the FC stack **11** preferably has higher insulation properties compared to the coolant used to cool ordinary electrical equipment. Since voltages exceeding 300 volts can occur in the FC stack **11**, increasing the electrical resistance of the coolant allows for the suppression of current leakage through the coolant or devices such as the radiator device **34**. The electrical resistance of the coolant may decrease as the coolant is used. This is because ions dissolve into the coolant flowing through the FC stack **11**. To remove such ions from the coolant and increase insulation property, it is desirable to place an ion exchanger in the coolant flow path.

The boost circuit **40** is configured to increase the voltage output by the FC stack **11** through power generation to a desired level. The subsequent stage of the boost circuit **40** is connected to the high-voltage electrical circuit including an inverter device for motor drive. As described later, the subsequent stage of the boost circuit **40** may also be connected in parallel to the low-voltage electrical circuit via a step-down circuit.

The control device **42** may include an electronic control unit (ECU) configured or programmed to control power generation by the FC module **10**. The control device **42** detects or estimates the operating state of the FC power generation system **180** based on signals output from various sensors. The control device **42** is configured or programmed to control power generation by the FC stack **11** by regulating the operation of the air compressor **12**, fuel circulation pump **24**, coolant pump **31**, and various valves, based on the operating state of the FC power generation system **180** and instructions output from a higher-level computer or other ECUs. The control device **42** includes, for example, a processor, a storage device, and an input/output interface.

In the following description, for simplicity, "anode gas" may be referred to as "fuel gas" or "fuel," and "anode gas supply pipe" may be referred to as "piping."

## 3. <Configuration Example of System of Work Vehicle>

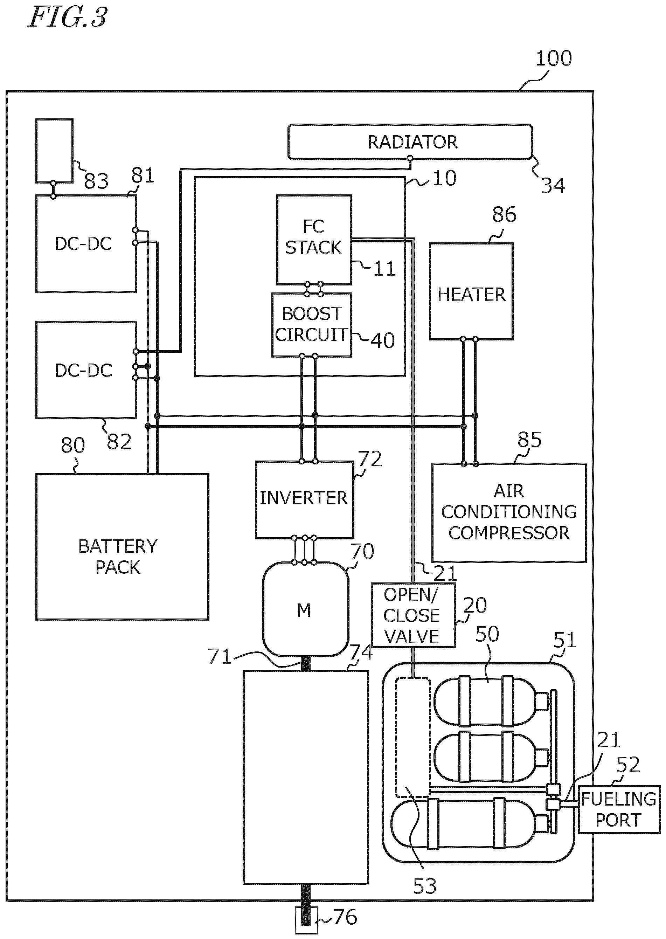

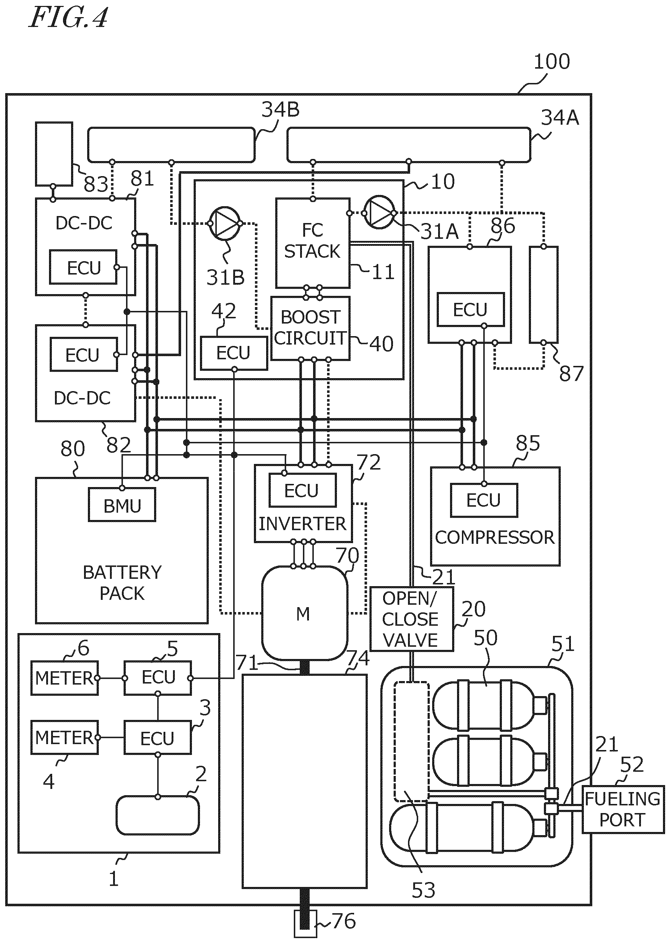

Next, referring to FIGS. **3** and **4**, a configuration example of the system of the work vehicle **100** according to this disclosure will be described. FIG. **3** is a block diagram schematically showing an example of electrical connections and power transmission between components of the work vehicle **100** according to this disclosure. FIG. **4** is a block diagram showing a more detailed configuration than the example in FIG. **3**. FIG. **4** schematically shows the paths of electrical signals (thin solid lines) and coolant (dotted lines) between components in the work vehicle **100**.

First, referring to FIG. **3**, an example of the electrical connections and power transmission between components will be described. Electrical connections include both high-voltage and low-voltage systems. High-voltage electrical connections provide, for example, the power supply voltage for inverter devices. Low-voltage electrical connections provide, for example, the power supply voltage for electronic components that operate at relatively low voltages.

In the example shown in FIG. **3**, the work vehicle **100** includes an FC module **10**, an inverter device **72**, a motor **70**, a power transmission system **74**, and a PTO shaft **76**. The DC voltage of the power generated in the FC stack **11** of the FC module **10** is boosted by the boost circuit **40** and then supplied to the inverter device **72**. The inverter device **72** converts the DC voltage into, for example, a three-phase AC voltage and supplies it to the motor **70**. The inverter device **72** includes a bridge circuit including a plurality of power transistors. The motor **70** includes a rotating rotor and a stator with a plurality of coils electrically connected to the inverter device **72**. The rotor is coupled to the output shaft **71**, for example, via a reduction gear (speed reducer) or directly. The motor **70** rotates the output shaft **71** with torque and rotational speed controlled according to the waveform of the three-phase AC voltage from the inverter device **72**.

The torque of the output shaft **71** of the motor **70** is transmitted to the power transmission system **74.** The power transmission system **74** operates with the motor **70** as the power source to drive the wheels **104R** and **104F,** as shown in FIG. **1,** and/or the PTO shaft **76.** This power transmission system **74** may have the same or a similar structure as the power transmission system in conventional tractors including internal combustion engines such as diesel engines. By adopting a power transmission system used in agricultural tractors, for example, it is possible to reduce the design and manufacturing costs for producing an agricultural work vehicle **100** including an FC power generation system. The power transmission system **74** includes a travel power transmission mechanism that transmits power from the motor **70** to the left and right rear wheels **104R** through a clutch, transmission, and rear wheel differential device, as well as a PTO power transmission mechanism that transmits power from the motor **70** to the PTO shaft **76.** The transmission case **102B** in FIG. **1** may be divided into a front case (mission case) housing the clutch and transmission and related components, and a rear case (differential gear case) housing the rear wheel differential device and related components. The rear case may also be referred to as a rear axle case.

The work vehicle **100** includes a secondary battery (battery pack) **80** that temporarily stores electrical energy generated by the FC module **10.** An example of the battery pack **80** includes a pack of lithium-ion batteries. The battery pack **80** is configured to supply power to the inverter device **72** at the necessary timing in cooperation with the FC module **10** or independently. Various battery packs used in electric passenger vehicles may be adopted as the battery pack **80.**

The work vehicle **100** includes various electrical equipment (onboard electronic components) that operates on electricity, in addition to the motor **70** and the inverter device **72.** Examples of electrical equipment include electromagnetic valves such as open/close valves **20,** air cooling fans of the radiator device **34,** electric pumps of air conditioning compressors **85,** and temperature control devices to heat or cool the FC stack **11.** These temperature control devices include electric heaters **86.** DC-DC converters **81** and **82** to obtain appropriate power supply voltages for the operation of electrical equipment, and storage batteries **83** may also be included in the electrical equipment. Furthermore, various electronic components not shown (such as lamps, electric motors for hydraulic systems) may be included in the electrical equipment. The electrical equipment may be electronic components similar to electrical equipment installed in conventional agricultural tractors.

In the example of FIG. **3,** the first DC-DC converter **81** is a circuit that steps down the voltage output from the boost circuit **40** of the FC module **10** to a first voltage, for example, 12 volts. The storage battery **83** is, for example, a lead-acid battery and stores electrical energy at the voltage output from the first DC-DC converter **81.** The storage battery **83** may be used as a power source for various electrical equipment such as lamps.

The work vehicle **100** shown in FIG. **3** includes not only the first DC-DC converter **81** but also a second DC-DC converter **82** as a voltage conversion circuit that steps down the high voltage output by the FC module **10.** The second DC-DC converter **82** is a circuit that steps down the voltage output from the boost circuit **40** of the FC module **10** (for example, several hundred volts) to a second voltage higher than the first voltage, for example, 24 volts. The air cooling fan of the radiator device **34,** for example, is configured to operate on the voltage output from the second DC-DC converter **82.** Note that although the radiator device **34** is described as a single component in FIG. **3,** one work vehicle **100** may include a plurality of radiator devices **34.** Additionally, the electric pump of the air conditioning compressor **85** and the electric heater **86** are configured to operate on the voltage output from the second DC-DC converter **82.**

The work vehicle **100** shown in FIG. **3** includes a temperature control device that cools or heats the FC stack **11** included in the FC power generation system. The operation of the temperature control device or alike requires relatively large power. The relatively high 24-volt voltage output by the second DC-DC converter **82** is applied to the temperature control device. In this embodiment, the temperature control device includes the radiator device **34** that releases heat from the coolant cooling the FC stack **11,** and the relatively high 24-volt voltage (second voltage) output by the second DC-DC converter **82** is applied to the radiator device **34.** The temperature control device includes a heater **86** that heats the FC stack **11.** The relatively high voltage output by the second DC-DC converter **82** may also be applied to the heater. The relatively high voltage output by the second DC-DC converter **82** may also be applied to air conditioning devices such as the air conditioning compressor **85.**

The work vehicle **100** may include a third voltage conversion circuit that converts the high voltage output by the FC module **10** to a third voltage higher than the second voltage. The third voltage is, for example, 48 volts. If the work vehicle **100** includes another motor in addition to the motor **70,** for example, the third voltage may be used as the power source for such other motors.

In an agricultural work vehicle including a fuel cell power generation system, in addition to the electrical equipment necessary for agricultural task, the agricultural work vehicle also includes electrical equipment necessary for the operation of fuel cell power generation, so the appropriate voltage magnitude may differ for each electrical equipment. According to the embodiments of this disclosure, it is possible to supply voltages of appropriate magnitudes.

In the example shown in FIG. **3,** a plurality of fuel tanks **50** are housed in a single tank case **51.** The fuel tank **50** is connected to a supplying port (fueling port) **52** through which fuel is supplied from the outside. This connection is made via piping **21** for flowing fuel gas. The fuel tank **50** is also connected to the FC module **10** via piping **21,** which is equipped with an open/close valve **20.** When hydrogen is used as the fuel gas, the piping **21** may be formed from materials with high resistance to hydrogen embrittlement, such as austenitic stainless steel like SUS316L.

As described later, a valve space **53** is provided in the tank case **51,** and various valves including a pressure reducing valve are placed in this valve space **53**. Through various valves provided in the valve space **53,** the piping **21** connects the fuel tank **50** and the FC module **10**. Fuel gas with reduced pressure by the pressure reducing valve flows through the piping **21** connecting the tank case **51** and the FC module **10**. When the fuel gas is hydrogen gas, high-pressure hydrogen gas of, for example, 35 megapascals or more may be supplied in the fuel tank **50,** but the hydrogen gas after passing through the pressure reducing valve may be reduced to about 2 atmospheres or less.

Next, refer to FIG. **4**. In addition to what is shown in FIG. **3,** FIG. **4** shows a plurality of ECUs that communicate within the work vehicle **100** and a user interface **1**. Communication can be executed via CAN bus wiring and other similar communication pathways, which function as paths for electrical signals (thin solid lines). FIG. **4** also shows a cooling system to perform thermal management of components. Specifically, the path of coolant (dotted line) is schematically shown.

As mentioned above, the first and second DC-DC converters **81** and **82** are configured to output voltages of different magnitudes. ECUs are also provided for these first and second DC-DC converters **81** and **82** to control each voltage conversion circuit. These ECUs, like other ECUs, are applied the relatively low first voltage output by the first DC-DC converter **81**.

In the example of FIG. **4,** the work vehicle **100** includes a cooling system in which coolant circulates via coolant pumps **31A** and **31B.** These coolant pumps **31A** and **31B** are provided inside the FC module **10**. The cooling system in this example includes a first radiator device **34A** responsible for cooling the FC stack **11** and a second radiator device **34B** to cool other electrical equipment. The cooling system includes a flow path (first flow path) where coolant flows between the FC stack **11** and the first radiator device **34A.** Furthermore, this cooling system has a flow path (second flow path) where coolant flows between electrical equipment including the motor **70** and the second radiator device **34B**. In the example of FIG. **4,** for instance, a heater core **87** used to heat the cabin is provided, and the coolant flowing through the first radiator device **34A** flows through the heater core **87**.

The user interface **1** includes an operation device **2** such as an accelerator pedal (or accelerator lever) and a main ECU **3** connected to the operation device **2**. The main ECU **3** is connected to a main meter **4**. The main meter **4** may display various parameters that identify the travel state or operating state of the work vehicle **100**. The user interface **1** further includes an FC system ECU **5** configured or programmed to control the FC power generation system. The FC system ECU **5** is connected to an FC meter **6**. The FC meter **6** may display various parameters that identify the operating state of the FC power generation system.

The cells of the battery pack **80** are controlled by a Battery Management Unit (BMU). The BMU includes circuits and a CPU (Central Processing Unit) that perform voltage monitoring for each cell of the battery, monitoring of overcharging and over-discharging, and cell balance control. These circuits and CPU may be mounted on a battery controller board.

### 4. <Embodiments>

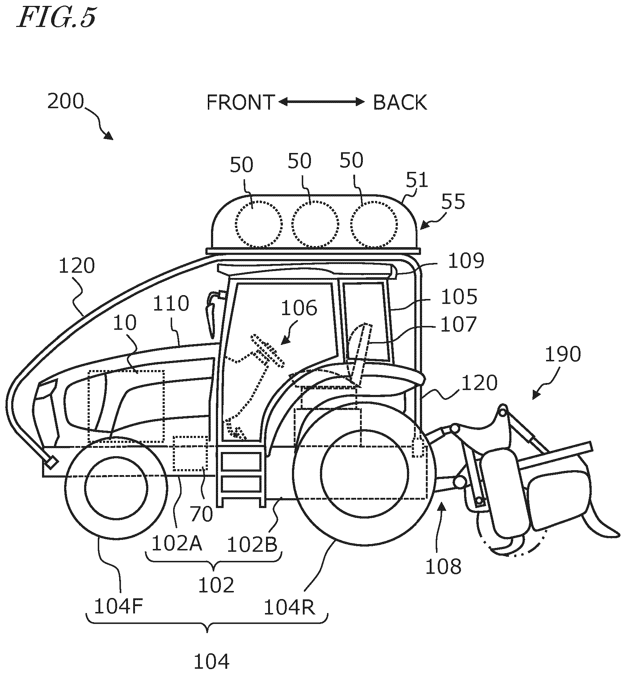

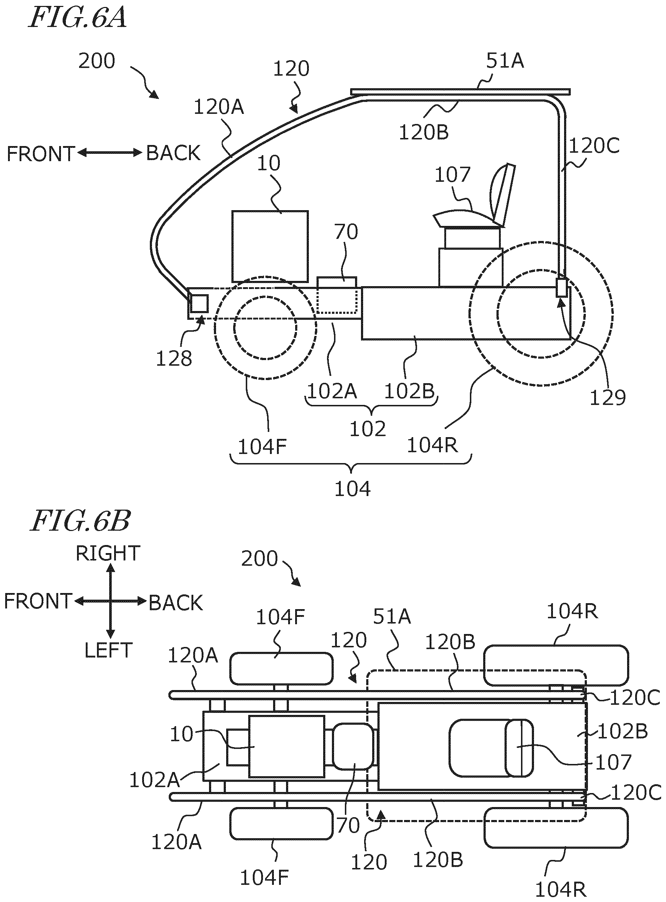

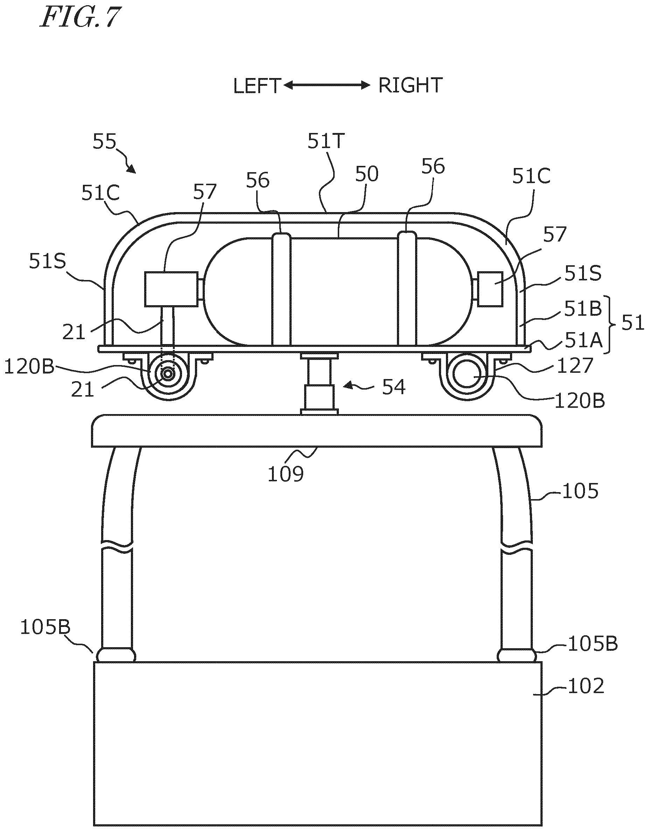

Next, referring to FIGS. **5** to **7,** the basic configuration of the work vehicle according to the embodiments of this disclosure will be explained. FIG. **5** is a side view schematically showing a configuration example of the work vehicle **200** in this embodiment. FIG. **6A** is a side view schematically showing an example of the placement relationship of the main portions in the work vehicle **200,** and FIG. **6B** is its plan view. FIG. **7** is a diagram schematically showing a mechanism to support the fuel tank **50**.

### 4.1. Mounting frame

The work vehicle **200** in this embodiment includes an FC module **10,** a fuel tank **50,** a motor **70,** a driver seat **107,** and a vehicle frame **102**. The work vehicle **200** has a configuration similar to the configuration of the work vehicle **100** explained with reference to FIG. **1**.

In this embodiment, the fuel tank **50** is supported by a mounting frame **120**. The mounting frame **120** is fixed to the vehicle frame **102** across the driver seat **107**. In the work vehicle **200** of this embodiment, due to the configuration and function of the mounting frame **120,** the fuel tank **50** can be stably supported above the driver seat **107**. As a result, the freedom of component placement of the FC module **10,** motor **70,** and other components supported by the vehicle frame **102** is increased. Additionally, the need to significantly alter the structure of conventional engine-driven tractors is decreased. These factors contribute to reducing design and manufacturing costs.

A configuration example of the mounting frame **120** will be explained below.

In this embodiment, the mounting frame **120** is an elongated structure, such as a pipe, fixed to the vehicle frame **102**. As shown in FIG. **6A,** the mounting frame **120** includes a front portion **120A,** a middle portion **120B,** and a rear portion **120C**. The front portion **120A** has a curved shape and connects to the middle portion **120B**. The middle portion **120B** has a shape that extends linearly in the front-back direction and connects to the rear portion **120C.** The rear portion **120C** has a shape that extends linearly in the vertical direction. Note that the shape of the mounting frame **120** shown is just an example, and the shape of the mounting frame **120** is not limited to this example.

In this embodiment, the vehicle frame **102** includes a front frame **102A** that rotatably supports the front wheels **104F** and a transmission case **102B** that rotatably supports the rear wheels **104R.** As shown in FIG. **6A,** one end (front end) **128** of the mounting frame **120** is fixed to the front frame **102A.** The other end (rear end) **129** of the mounting frame **120** is fixed to the transmission case **102B.** These fixations may be done by appropriate methods such as welding or bolt joining, depending on the material of the mounting frame **120.** The mounting frame **120** may be formed from metal, synthetic resin, carbon fiber, or composite materials such as carbon fiber reinforced plastic or glass fiber reinforced plastic. The transmission case **102B** includes a rear axle case, and the rear end **129** of the mounting frame **120** may be fixed to the rear axle case. When the mounting frame **120** is formed from metal, a portion or an entirety of its surface may be covered with synthetic resin.

The mounting frame **120** is required to have sufficient rigidity to support the fuel tank **50.** When the work vehicle **200** travels on uneven ground, the fuel tank **50** supported by the mounting frame **120** may vibrate up and down or front, back, left, and right. Due to the elastic deformation of the mounting frame **120,** a portion or an entirety of the mounting frame **120** bends moderately, thereby mitigating the impact on the fuel tank **50.** To obtain this effect of mitigating impacts, it is effective for the front portion **120A** of the mounting frame **120** to have a curved shape and allow deformation within a predetermined range. A portion or an entirety of the rear portion **120C** of the mounting frame **120** may also have a curved or inclined shape.

The outer shape of the cross-section perpendicular to the elongated direction of the mounting frame **120** is, for example, circular or elliptical, but is not limited to these. The cross-sectional shape may be rectangular or other polygonal shapes. When the mounting frame **120** has an approximately cylindrical or columnar shape, its outer diameter is, for example, in the range of 10 mm or more and 100 mm or less. The inner diameter may be 0% or more and 90% or less of the outer diameter, for example.

As shown in FIG. **5,** the work vehicle **200** includes a cabin **105** that surrounds the driver seat **107** between the vehicle frame **102** and the mounting frame **120.** The driver seat **107** is located in the rear portion of the interior of the cabin **105** (referred to as the "cabin interior"). In front of the driver seat **107,** for example, a steering wheel **106** is provided to change the direction of the front wheels **104F.** The cabin **105** includes a cabin frame that defines its skeleton. A roof **109** is provided on the upper portion of the cabin frame. The cabin frame in this embodiment is a 4-pillar style. The cabin **105** is supported by the transmission case **102B** of the vehicle frame **102,** for example, via vibration-isolating mounts. The interface **1** explained with reference to FIG. **4** is provided inside the cabin **105.** Since the cabin **105** does not directly support the fuel tank **50,** there is no need to specially increase its strength, and a cabin that has been used in conventional tractors can be adopted.

The middle portion **120B** of the mounting frame **120** extends in the front-back direction along the roof **109** of the cabin **105** and functions as a support portion (support) for the fuel tank **50.** The fuel tank **50** is supported by the middle portion **120B** of the mounting frame **120** above the roof **109** of the cabin **105.**

Next, refer to FIG. **6B.** In this embodiment, the mounting frame **120** includes not one but two frames positioned on the left and right sides of the work vehicle **200.** In the plan view of FIG. **6B,** the left and right mounting frames **120** extend parallel or substantially parallel to the front-back direction of the work vehicle **200.** The two mounting frames **120** are positioned to avoid the center area of the field of view of an operator seated in the driver seat **107** looking in the forward direction. The number of mounting frames **120** may be one, or it may be three or more. It is desirable that the mounting frame **120** is placed to avoid the center area of the field of view of an operator seated in the driver seat **107** looking in the forward direction, and to support the fuel tank **50** in a balanced manner. From this perspective, it is desirable that the number of mounting frames **120** is even, for example.

As shown in FIG. **6B,** in a plan view looking down from directly above, individual mounting frames **120** do not need to extend directly above the driver seat. In this disclosure, the mounting frame **120** "being fixed to the vehicle frame across the driver seat" means that, as shown in FIG. **6A,** in a side view, a portion of the mounting frame fixed to the vehicle frame extends above the driver seat **107,** or above the cabin **105,** along the front-back direction. In the example of FIG. **6B,** the two mounting frames **120** are parallel to each other, but the spacing between the mounting frames **120** does not need to be constant along the front-back direction and may vary.

The work vehicle **200** includes a placement platform **51A** that connects the left frame **120** and the right frame **120.** The fuel tank **50** can be positioned on the placement platform **51A.** When there is a plurality of fuel tanks **50,** the plurality of fuel tanks **50** may be provided in a fuel tank module. The fuel tank module includes a tank case **51** that houses a plurality of fuel tanks **50** (FIG. **5**). The left and right mounting frames **120** may be connected to each other by structural elements other than the placement platform **51A.**

A coupling device **108** is provided at the rear end of the transmission case **102B,** which forms the rear portion of the vehicle frame **102.** The coupling device **108** includes, for example, a three-point support device (referred to as a "three-point link" or "three-point hitch"), a PTO shaft, a universal joint, and a communication cable. The implement **190** can be attached to or detached from the work vehicle **200** using the coupling device **108.** The coupling device **108** can, for example, raise and lower the three-point link by a hydraulic device to change the position or posture of the implement **190.** Additionally, power can be transmitted from the work vehicle **200** to the implement **190** via the universal joint. The work vehicle **200** can execute predetermined work (agricultural task) with the implement **190** while pulling the implement **190.** The coupling device **108** may be provided on the front portion of the vehicle frame **102,** in which case the implement **190** can be connected to the front of the work vehicle **200.**

Next, referring to FIG. **7,** an example of the configuration to support the fuel tank **50** by the mounting frame **120** will be explained.

In the example of FIG. **7,** the placement platform **51A** of the fuel tank **50** is fixed to the middle portion **120B** of the mounting frame **120.** This fixation can be realized, for example, by a connector **127** such as a pipe mounting fitting. The fuel tank **50** is fixed to the placement platform **51A,** for example, by a fixing belt **56.** A cover **51B** is detachably or openably/closably attached to the placement platform **51A** to cover the fuel tank **50.** In this example, the tank case **51** includes the placement platform **51A** and the cover **51B.** The tank case **51** functions as part of at least one enclosure that houses the FC module **10** and the fuel tank **50.**

The cover **51B** in this embodiment includes a curved portion **51C** that connects from the top surface portion **51T** to the surrounding side surface portion **51S.** The height of the cover **51B** is highest at the top surface portion **51T,** and the height of the curved portion **51C** decreases as it approaches the side surface portion **51S.** By adopting the cover **51B** with the shape above, the effects are obtained: reducing or preventing rain accumulation on the cover **51B** of the tank case **51,** and facilitating removal of snow accumulated on the tank case **51.** An opening may be provided in the tank case **51** to exhaust fuel gas that has leaked inside to the outside. It is preferable that a structural element such as a lid that covers the opening is provided for the opening to prevent rain and dust from entering the inside of the tank case **51.** The tank case **51** may be formed from metal, synthetic resin, carbon fiber, or composite materials such as carbon fiber reinforced plastic or glass fiber reinforced plastic.

Inside the tank case **51,** the fuel tank **50** is connected to piping **21** to flow fuel gas via valves **57** such as a pressure reducing valve and an electromagnetic valve. The piping **21** inside the tank case **51** is connected to piping **21** outside the tank case **51** through the opening provided, for example, in the placement platform **51A.** In the example of FIG. **7,** a portion of the piping **21** outside the tank case **51** is disposed inside the middle portion **120B** of the mounting frame **120.** In other words, a portion of the piping **21** connecting the fuel tank **50** and the FC module **10** is located inside the mounting frame **120.** The piping **21** connecting the tank case **51** and the FC module **10** is configured to pass fuel that has been reduced in pressure by the pressure reducing valve. Wiring cables are connected to valves **57** such as electromagnetic valves. A portion or an entirety of such wiring cables may be routed through the inside of the mounting frame **120.**

The piping **21** or wiring cables may be arranged along the outer surface of the mounting frame **120** rather than inside the mounting frame **120.** However, it is preferable that they are arranged inside the mounting frame **120,** as the mounting frame **120** which has rigidity functions to protect the piping **21** and wiring cables.

The mounting frame **120** does not need to be fixed to the roof **109** of the cabin **105.** As shown in FIG. **7,** there may be a gap between the roof **109** of the cabin **105** and the middle portion **120B** of the mounting frame **120.** When the work vehicle **200** is traveling on uneven ground, the vertical vibrations of the cabin **105** and the vertical vibrations of the tank case **51** supported by the mounting frame **120** do not need to match in amplitude and frequency. In the example of FIG. **7,** a damper **54** is provided between the roof **109** and the placement platform **51A.** With the damper **54,** even if the work vehicle **200** undergoes significant vertical movement, collision between the placement platform **51A** and the roof **109** is suppressed.

In this embodiment, the rear portion **120C** of the mounting frame **120,** which extends in the vertical direction, supports the placement platform **51A** (FIGS. **5, 6A**). When the rear portion **120C** of the mounting frame **120** is made of a material such as metal that is not easily extensible along its length, the rear portion **120C** functions to suppress the vertical movement of the placement platform **51A** relative to the vehicle frame **102.** On the other hand, when the cabin **105** is supported by the vehicle frame **102** via vibration-isolating mounts **105B,** the vibration of the cabin **105** relative to the vehicle frame **102** may show different behavior from the vibration of the placement platform **51A** relative to the vehicle frame **102.** When providing a damper **54** between the roof **109** and the placement platform **51A,** it is possible to control the coupled vibration of the cabin **105** and the fuel tank **50** by adjusting the damping ratio of the damper **54.** The type, number, and position of the damper **54** can be determined considering the size and weight of the tank case **51** and other relevant factors. In place of or in combination with the damper **54,** the cabin **105** and the placement platform **51A** may be coupled by elastic members such as springs or rubber. The damper **54** and/or elastic members may be arranged to couple the middle portion **120B** of the mounting frame **120,** rather than the placement platform **51A,** to the cabin **105.**

Unlike this embodiment, when the fuel tank **50** is firmly fixed to the cabin **105,** for example, by welding or connecting fittings such as flange bolts, the cabin **105** and the fuel tank **50** move or vibrate integrally during travel. In contrast, in this embodiment, some degree of freedom of movement is allowed between the cabin **105** and the fuel tank **50,** the vibration mode of the cabin **105** from the vibration mode of the fuel tank **50** can be separated. This brings about a soundproofing effect in the cabin interior, for example.

As mentioned above, when a portion of the piping **21** is provided inside the mounting frame **120,** a fueling port connected to the piping **21** may be provided on the mounting frame **120.** (Details of the fueling port **52** (FIGS. **3, 4**) will be described later.)

### 4.2. Fuel Tank Module

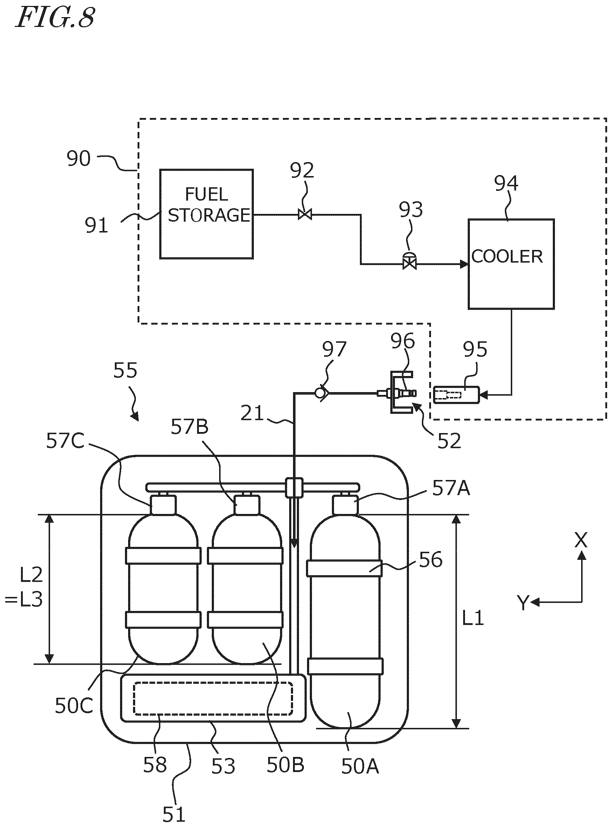

Next, referring to FIG. **8,** a configuration example of the fuel tank module will be explained. In FIG. **8,** X-axis and Y-axis perpendicular to each other are shown for reference.

The fuel tank module **55** in the example of FIG. **8** has a plurality of fuel tanks **50,** a valve system **58** connected to the plurality of fuel tanks **50,** and a tank case **51** that houses the plurality of fuel tanks **50** and the valve system **58.**

The valve system **58** includes open/close valves and pressure reducing valves located inside the tank case **51.** Additionally, the valve system **58** housed in the tank case **51** may further include check valves, filters, safety valves, pressure sensors, and vent pipes. These devices included in the valve system **58** are connected by high-pressure or low-pressure piping.

The tank case **51** includes a bottom plate that extends along a plane (XY plane) defined by the X-axis direction (first direction) and the Y-axis direction (second direction), and the plurality of fuel tanks **50** are placed on this bottom plate. In this embodiment, a placement platform **51A** defines and functions as the bottom plate. The shape of the placement platform **51A** need not be a flat plate and may include ridges or grooves to increase strength. The placement platform **51A** may also include protrusions and recesses to secure the fuel tanks **50,** cover **51B,** and other parts such as valves, and/or openings.

In this embodiment, each of the plurality of fuel tanks **50** is a high-pressure hydrogen tank having a cylindrical portion extending in the X-axis direction. The outer diameter of the cylindrical portion may be about 300 mm, for example. An example of the fuel tank **50** is a resin high-pressure hydrogen tank, which may include a multi-layer structure including, for example, a resin liner, carbon fiber reinforced plastic, and glass fiber reinforced plastic.

In this example, the plurality of fuel tanks **50** include a first fuel tank **50A** having a first length **L1** in the X-axis direction, a second fuel tank **50B** having a second length **L2** shorter than the first length **L1** in the X-axis direction, and a third fuel tank **50C** having a third length **L3** shorter than the first length **L1** in the X-axis direction. In other embodiments of this disclosure, the third fuel tank **50C** need not be included, and additional fuel tanks may be included. The number of fuel tanks **50** in one fuel tank module **55** is not limited to three and may be any plurality. In the example of FIG. **8,** the third length **L3** is equal to the second length **L2,** but the third length **L3** may differ from the second length **L2.**

The first fuel tank **50A,** the second fuel tank **50B,** and the third fuel tank **50C** are arranged (aligned) in the Y-axis direction perpendicular to the X-axis direction. At least a portion of the valve system **58** is positioned in a space formed between the second fuel tank **50B** and the tank case **51** inside the tank case **51.** At least another portion of the valve system **58** is positioned in a space between the third fuel tank **50C** and the tank case **51** inside the tank case **51.** In other words, the valve system **58** is positioned in a valve space **53** within the space from the second fuel tank **50B** and the third fuel tank **50C** to the tank case **51.** The sizes of **L1-L2** and **L1-L3** are determined based on the size of the space required for the valve space **53.** In this embodiment, for example, when **L1** is about 700 mm, **L1-L2 = L1-L3** is set to 100 mm or more and 200 mm or less.

By housing the fuel tanks **50** of different lengths in the tank case **51** in this manner, it is possible to provide a space suitable for component storage within the tank case **51,** and this space can be utilized as a valve space **53.** By positioning several valves including open/close valves and pressure reducing valves, in the valve space **53,** the functionality of the fuel tank module **55** can be enhanced. Specifically, due to the function of the pressure reducing valve inside the tank case **51,** the fuel pressure can be reduced from, for example, 35 megapascals to several atmospheres before being extracted outside the tank case **51.** As a result, expensive piping for high-pressure hydrogen gas is not necessary for the piping **21** connecting the tank case **51** and the FC module **10.**

Next, referring to FIG. **8,** an example configuration to supply fuel into the fuel tanks **50** of such a fuel tank module **55** will be explained.

In the example shown in FIG. **8,** the fueling device **90** includes a fuel storage **91,** a shut-off valve **92,** a regulator **93,** a cooler **94,** and a dispenser nozzle **95.** The fueling device **90** may be installed at a fixed site or may function as a mobile station mounted on a vehicle such as a truck. The dispenser nozzle **95** of the fueling device **90** is connected to the cooler **94** via a flexible fuel hose. The worker performing the refueling inserts the dispenser nozzle **95** into the fueling port **52** of the work vehicle **200,** and then the process of filling the fuel (high-pressure hydrogen gas) begins.

The fueling port **52** equipped on the work vehicle **200** includes a receptacle **96** that receives fuel supply from the dispenser nozzle **95** of the fueling device **90.** The receptacle **96** is inserted into an opening hole provided at the tip of the dispenser nozzle **95** when the dispenser nozzle **95** is inserted into the fueling port **52.** The fuel injected from the dispenser nozzle **95** into the receptacle **96** is supplied to the fuel tanks **50A, 50B,** and **50C** placed inside the tank case **51** of the fuel tank module **55** through piping **21** with a check valve **97** installed midway. The fuel tanks **50A, 50B,** and **50C** are connected to the piping **21** via electromagnetic valves **57A, 57B,** and **57C,** respectively.

By selectively opening the electromagnetic valves **57A, 57B,** and **57C,** fuel from the fueling device **90** is supplied into any of the corresponding fuel tanks **50A, 50B,** and **50C.**

### 4.3. Fuel Gas Sensor

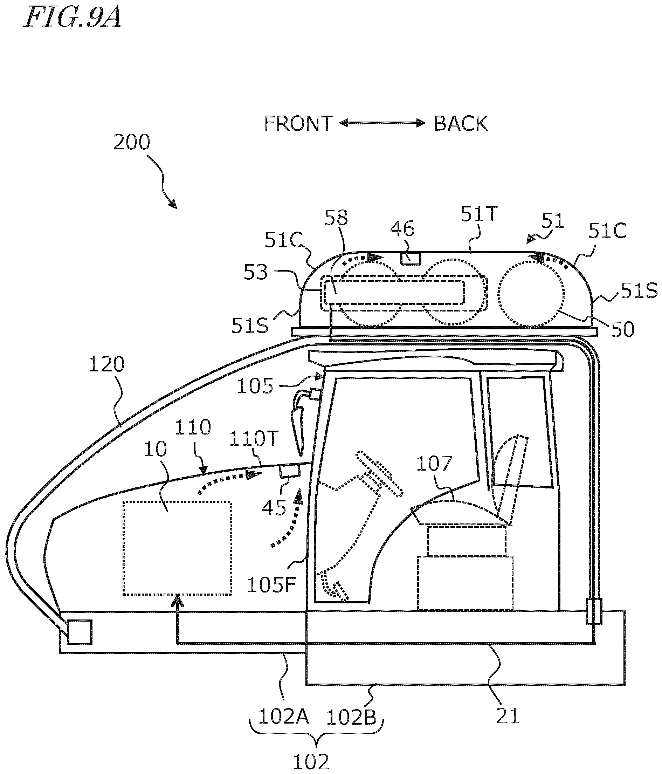

In this embodiment, the FC module **10** and the fuel tank **50** are housed in at least one "enclosure." FIG. **9A** is a diagram schematically showing the flow of fuel (hydrogen) gas that leaks inside the front housing **110** and the tank case **51** functioning as the enclosures. In FIG. **9A,** the flow of leaked fuel gas is schematically represented by dotted arrows. Such fuel gas leakage may occur from the FC module **10,** fuel tank **50,** valve system **58,** and piping **21,** and related components. In the example of FIG. **9A,** the piping **21** connecting the fuel tank **50** and the FC module **10** is routed inside the mounting frame **120** and is inserted into the interior of the front housing **110.**

The work vehicle **200** of this embodiment includes at least one fuel gas sensor provided inside the enclosure. In this embodiment, since the fuel gas is hydrogen gas, examples of the fuel gas sensor may include hydrogen gas sensors operating on various principles such as catalytic combustion type, gas thermal conductivity type, solid electrochemical type, and semiconductor type. If the fuel gas sensor detects a fuel gas leak, depending on the concentration level of the leaked fuel gas, actions such as notification/warning to the driver, fail-safe control or operation stop in the FC power generation system may be executed.

The enclosures in this embodiment, namely the front housing **110** and the tank case **51,** each has a shape and structure that controls the spread of leaked hydrogen gas into the atmosphere inside them, thereby facilitation to the detection of the hydrogen gas. Specifically, the upper surface **110U** of the front housing **110** has a shape that gradually or stepwise increases in height from the front end of the work vehicle **200** towards the rear direction. Hydrogen gas that leaks inside the front housing **110,** being lighter than air, flows along the upper surface **110U** of the front housing **110** towards the rear direction, approaching the front surface **105F** of the cabin **105.** Additionally, some of the fuel gas that leaks from the piping **21** inside the front housing **110,** or from the connection between the FC module **10** and the piping **21,** may rise along the front surface **105F** of the cabin **105.**

In this embodiment, the width of the front housing **110** is designed to be narrower than the wheel spacing of the front wheels **104F.** This is different from passenger cars where the hood covers the left and right front wheels, and the width of the hood is larger than the wheel spacing of the front wheels. By making the width of the front housing **110** narrower than the wheel spacing of the front wheels **104F,** the volume of the front housing **110** can be relatively small. By making the volume of the front housing **110** small, it is possible to easily detect leaked hydrogen gas by the fuel gas sensor before it becomes diluted.

As mentioned above, in this embodiment, the height of the tank case **51** is highest at the top surface portion **51T,** and the height of the curved portion **51C** decreases as it approaches the side portion **51S.** Therefore, hydrogen gas that leaks inside the tank case **51** tends to gather in the upper portion of the inner area rather than the peripheral area of the tank case **51.**

In this embodiment, the tank case **51** is provided behind the front housing **110** and at a higher position than the front housing **110.** Therefore, when the front housing **110** and the tank case **51** are communicating through the piping **21**, hydrogen gas that leaks inside the front housing **110** may enter the interior of the tank case **51** through some path. Among the "enclosures" of the FC power generation system, the tank case **51** is located at the highest position. Therefore, when the enclosures form a communicating space, hydrogen gas that leaks inside the enclosures tends to gather near the tank case **51,** more specifically, near the top surface portion **51T** of the tank case **51,** which is the highest portion among the enclosures.

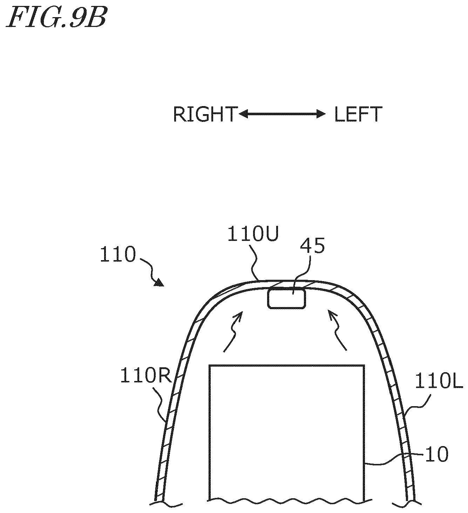

In the example of FIG. **9A,** the fuel gas sensor includes a first sensor **45** provided inside the front housing **110** and a second sensor **46** provided inside the tank case. The first sensor **45** is positioned in a relatively high area inside the front housing **110,** that is, an area where fuel gas accumulates. Specifically, the first sensor **45** is positioned in an area inside the front housing **110** where the front surface **105F** of the cabin **105** and the upper surface **110U** of the front housing **110** are close to each other. More precisely, as shown in FIG. **9B,** the first sensor **45** is positioned in a space behind the FC module **10** and surrounded by the side surfaces **110L, 110R** and the upper surface **110U** of the front housing **110** on three sides. Furthermore, the first sensor **45** is positioned above the FC module **10.**

The second sensor **46** is provided inside the tank case **51** at a higher position than the valve system **58,** preferably on the underside of the top surface portion **51T** of the tank case **51.** The second sensor **46** is positioned higher than the first sensor **45** and functions as the fuel gas sensor placed at the highest position in the work vehicle **200.**

### 4.4. Radiator Device

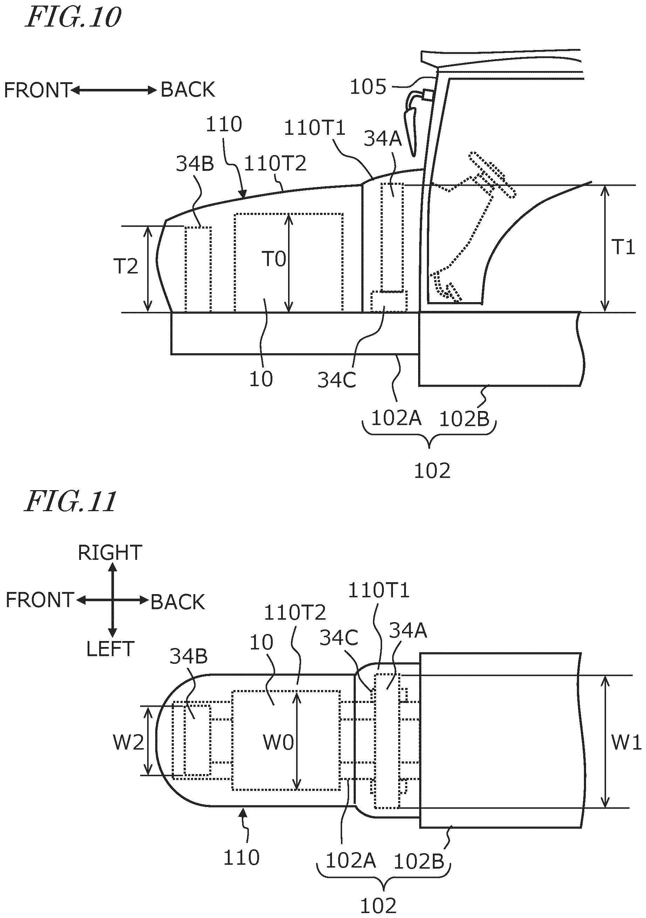

Next, referring to FIGS. **10** and **11,** the configuration of the radiator device in this embodiment will be explained. FIGS. **10** and **11,** respectively, are side view and top view schematically showing an example placement of the radiator device in this embodiment.

The work vehicle **200** of this embodiment comprises a cooling system in which coolant circulates via the coolant pumps **31A** and **31B** shown in FIG. **4,** as mentioned earlier. And as shown in FIGS. **10** and **11,** the work vehicle **200** includes a first radiator device **34A** positioned on one side (the rear side) of the FC module **10** and a second radiator device **34B** positioned on the other side (the front side) of the FC module **10.**

The first radiator device **34A** is connected to a flow path (first flow path) to cool the FC stack **11** (refer to FIG. **4**) included in the FC module **10.** On the other hand, the second radiator device **34B** is connected to a flow path (second flow path) to cool electrical equipment, including the motor **70.** In this manner, the cooling system in the work vehicle **200** of this embodiment includes the first radiator device **34A** to cool the FC stack **11,** and the second radiator device **34B** to cool other electrical equipment. It is desirable to enhance the ability to cool the FC stack **11** more than the ability to cool other electrical equipment. To enhance the cooling ability of radiator devices, it is necessary to expand the front surface area of the radiator devices and increase the area (core size) where the core portion of the heat exchanger contacts air. Therefore, in this embodiment, the front surface area of the first radiator device **34A** is larger than the front surface area of the second radiator device **34B.** Specifically, as shown in FIG. **11,** the width **W1** of the first radiator device **34A** is larger than the width **W2** of the second radiator device **34B.** Furthermore, in this embodiment, the width **W2** of the second radiator device **34B** is smaller than the width **W0** of the FC module **10,** and the width **W1** of the first radiator device **34A** is larger than the width **W0** of the FC module **10.**

Positioning the first radiator device **34A** at the rear of the FC module **10** makes it possible to achieve the following advantages.

First, the height and width of the front portion of the front housing **110** can be smaller than the height and width of the rear portion. Specifically, the front housing **110** in this embodiment includes a first portion **110T1** positioned at the rear side and a second portion **110T2** positioned at the front side, and the height and width of the second portion **110T2** are smaller than the height and width of the first portion **110T1.** On the contrary, if the first radiator device **34A** of large size is placed in front of the FC module **10,** or if both the first and second radiator devices **34A** and **34B** are placed in front of the FC module **10,** it is necessary to expand the width of the second portion **110T2** of the front housing **110.** However, if the width of the front housing **110** is made larger than the spacing between the left and right front wheels, covering the front wheels **104F** with the front housing **110,** when an operator seated in the driver seat 107 looks forward, the front housing **110** obstructs the view and reduces visibility of the position and direction of the front wheels **104F,** thus it is difficult to steer accurately along farm roads or furrows, for example.

In contrast, according to this embodiment, there is no need to expand the width of the second portion **110T2** of the front housing **110,** so there is no problem of the view being narrowed by an expanded front housing **110** when the operator seated in the driver seat looks forward.

The first radiator device **34A** can have a sufficient width **W1** and height **T1** by expanding the first portion **110T1** of the front housing **110** to the necessary extent. Here, the height difference **T1-T2** between the two radiator devices **34A** and **34B** is in the range of 10 mm or more and 300 mm or less, for example, and the width difference **W1-W2** is in the range of 20 mm or more and 500 mm or less, for example.

Additionally, by positioning the two radiator devices **34A** and **34B** on opposite sides, sandwiching the FC module **10,** the problem of the two radiator devices **34A** and **34B** thermally interfering with each other is also solved.

It is desirable for the front housing **110** to have at least one opening portion that allows airflow to reach the first radiator device **34A** and/or the second radiator device **34B.** A portion of the opening portion can be realized by a gap between the first portion **110T1** and the second portion **110T2** of the front housing **110.** This gap can be provided by making at least a portion of the height and width at the front end of the first portion **110T1** of the front housing **110** larger than the height and width at the rear end of the second portion **110T2.**

It is preferable for the FC module **10** to be surrounded by a casing that has sides and a top surface configured to guide the airflow from front to back. By adopting this configuration, it is possible to direct sufficient airflow to the first radiator device **34A** positioned at the rear of the FC module **10,** thereby the efficiency of heat exchange in the first radiator device **34A** can be enhanced.

In this embodiment, as shown in FIG. **10,** the first radiator device **34A** is fixed to the front frame **102A** via a support portion **34C,** and the upper end (height **T1**) of the first radiator device **34A** is at a higher position than the upper end (height **T2**) of the second radiator device **34B.** Specifically, the upper end (height **T1**) of the first radiator device **34A** is higher than the height **T0** of the FC module **10,** and the upper end (height **T2**) of the second radiator device **34B** is lower than the height **T0** of the FC module **10.** By adopting this configuration, the air introduced into the front housing **110** of the moving work vehicle **200** can flow smoothly towards the rear inside the front housing **110,** allowing not only the second radiator device **34B** but also the first radiator device **34A** to properly perform heat exchange of the coolant.

It should be noted that the lower end of the first radiator device **34A** is elevated by the support portion **34C.** By using the support portion **34C,** the first radiator device **34A** can be positioned above the motor **70** (FIG. **5**).

It should also be noted that an appropriate number of opening portions or gaps are provided in the front housing **110** as necessary. These opening portions or gaps can define and function as air inlets and outlets to provide airflow.

## 5. <Example>

### 5.1. Opening and Closing of the Hood

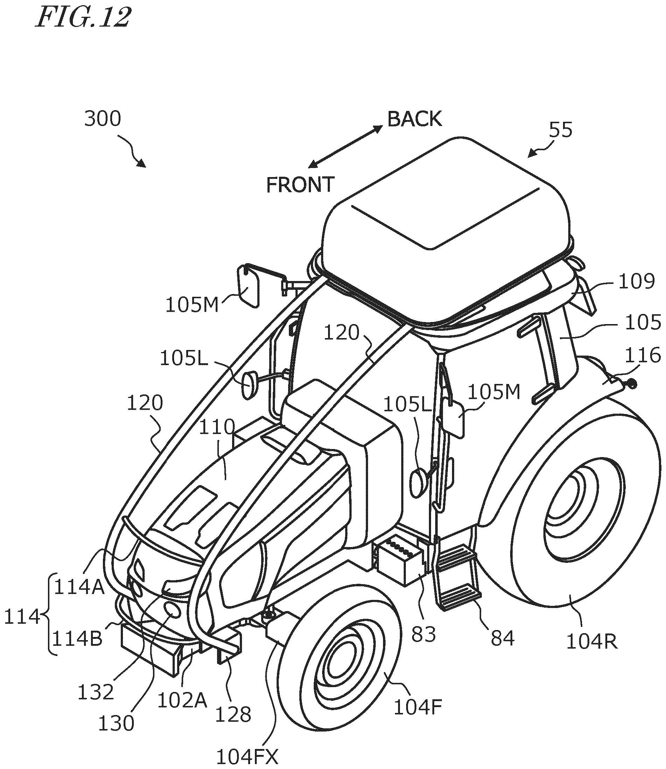

The following describes an agricultural tractor as an example of the work vehicle of this disclosure, referring to FIGS. **12** to **16,** and as necessary, FIGS. **1** to **11.** FIGS. **12, 13, 14, 15,** and **16** are perspective, side, top, front, and rear views, respectively, of the agricultural tractor in this example.

The basic configuration of the agricultural tractor in this example is the same as that of the work vehicle in the embodiment previously described. The following explains the differences between the embodiment and the example. In the drawings, the same reference numerals are given to corresponding components between the embodiment and the example.

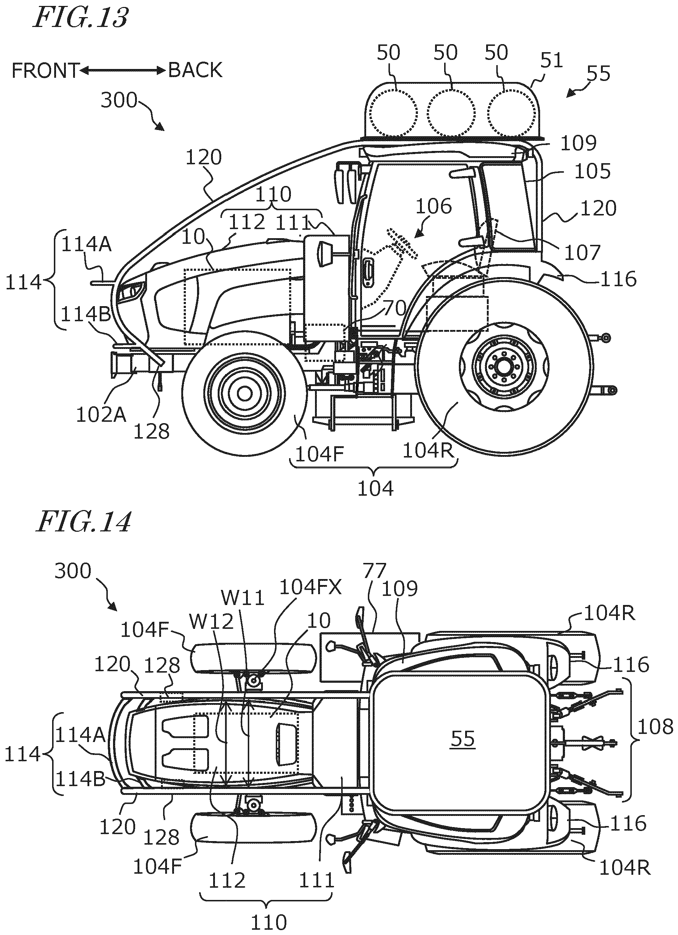

As shown in FIG. **13,** the agricultural tractor **300** in this example includes: a mounting frame **120** that is fixed to the vehicle frame **102** across the driver seat **107** and that supports a fuel tank module **55** including a fuel tank **50,** and a front housing **110** that covers the fuel cell module **10.** The front housing **110** can be opened and closed. Specifically, this front housing **110** includes a fixed housing portion **111** that is fixed to the vehicle frame **102,** and a movable housing portion **112** that is supported to be openable and closable by the vehicle frame **102** or the fixed housing portion **111.** The specific example configuration of the front housing **110** will be described later.

In this example as well, the mounting frame **120** includes a left side frame and a right side frame. One end of each mounting frame **120** is fixed to the front frame **102A** at a connection position **128** that is in front of the axle (front axle) **104FX** of the front wheels **104F.** As shown in FIG. **14,** in a plan view (top view) looking down from above, the front housing **110** is positioned between the left side frame and the right side frame, and protrudes forward of the connection position **128.**

The agricultural tractor **300** of this example includes a connecting bar **114** that connects the left side frame and the right side frame. The connecting bar **114** in this example includes a plurality of bars **114A** and **114B** disposed at different heights. As shown in the plan view of FIG. **14,** the connecting bars **114A** and **114B** are connected to the left and right frames **120** at a position in front of the connection position **128** of the mounting frame **120.** The connecting bar **114** has rigidity or mechanical strength to maintain a constant distance between the left and right mounting frames **120** even when an external force is applied to one or both of the left and right mounting frames **120.** The connecting bar **114** is preferably formed of metal. The connecting bar **114** increases the overall structural strength of the mounting frame **120.**

As shown in FIG. **12,** the agricultural tractor **300** includes left and right back mirrors **105M** and turn signal/clearance lights **105L** attached to the cabin **105.** FIG. **12** shows a lead-acid battery **83** and a step **84** to assist in getting in and out of the cabin **105.** Headlamps **130** and work lights **132** are provided on the front portion of the front housing **110.** A plurality of work lights is provided on the roof **109,** and various sensor devices such as laser sensors for obstacle detection may also be provided. The positions of these devices and structural elements that are typically equipped on agricultural tractors are not limited to the illustrated examples.

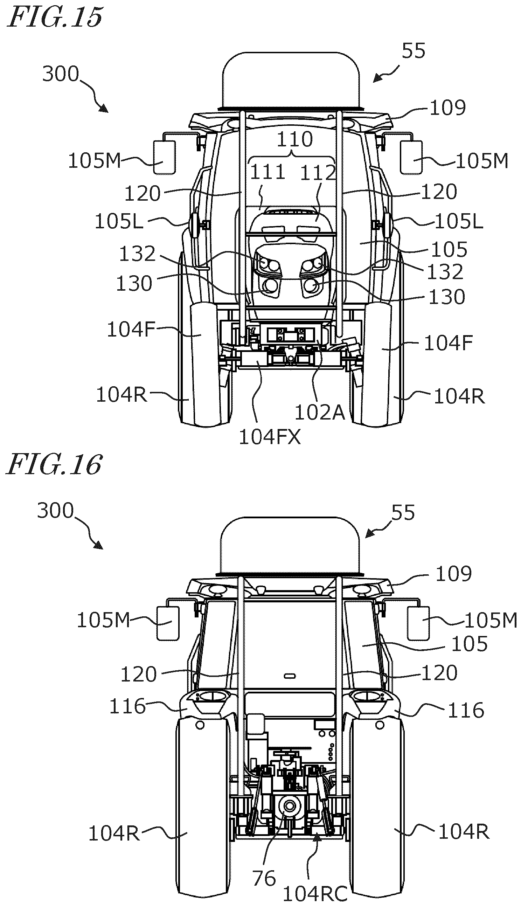

As shown in FIGS. **15** and **16,** in the agricultural tractor **300** of this example, the fuel tank module **55** is positioned above the cabin **105,** and the left and right mounting frames **120** supporting the fuel tank module **55** are positioned across the cabin **105.** As shown in FIG. **16,** the portion of the mounting frame **120** positioned behind the cabin **105** extends vertically between the left and right rear fenders **116.** The rear ends of each mounting frame **120** are fixed to the rear axle case (rear axle) **104RC.**

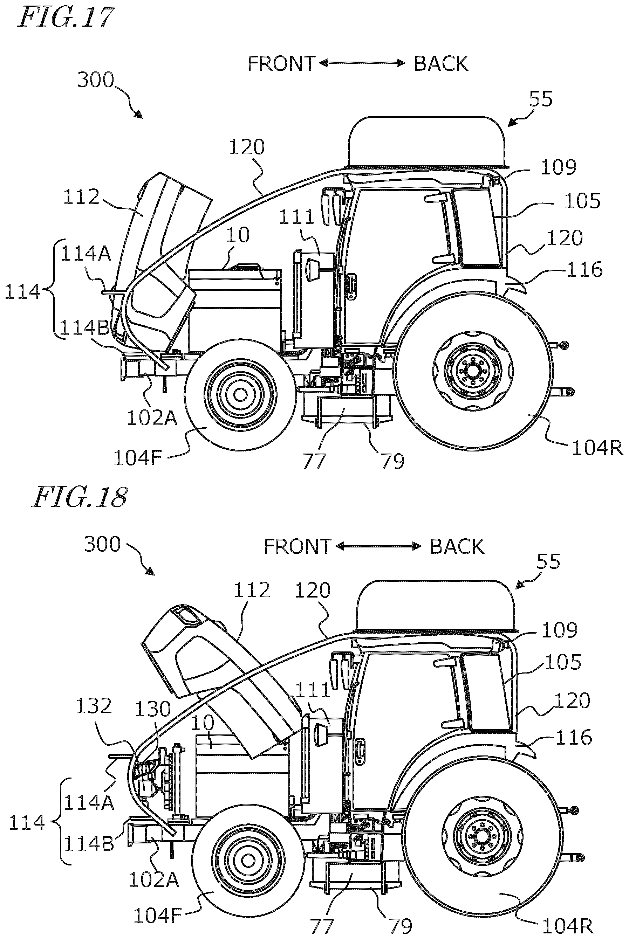

The following describes an example configuration of the movable housing portion **112.** In this example, FIG. **17** is a side view of the agricultural tractor **300** with the front housing **110** in an open state. The front housing **110,** specifically the movable housing portion **112,** is configured to rotate around a rotation axis positioned in front of the axle (front axle **104FX:** see FIG. **12**) of the front wheels **104F.** The position of the rotation axis is defined by a rotational support device such as a hinge. In the example of FIG. **17,** the front lower end of the movable housing portion **112** is connected to the front frame **102A** by a rotational support device. The position of the rotation axis is not limited to this example. As shown in FIG. **18,** the movable housing portion **112** may be configured to rotate around a rotation axis that is behind the axle position of the front wheels **104F.** In the example of FIG. **18,** a rotational support member such as a hinge is provided on the fixed housing portion**111.**

In this example, the movable housing portion **112** is configured to house the fuel cell module **10.** In contrast, the fixed housing portion **111** houses devices included in the fuel cell power generation system, specifically, a radiator device **34A** that dissipates heat from the coolant for the fuel cell.

An important point in this example is that the mounting frame **120** has a shape that does not interfere with the front housing **110** (specifically the movable housing portion **112**) when the position or orientation of the front housing **110** changes from the closed state to the open state. In other words, in the mounting frame **120** in front of the cabin **105,** the distance (spacing) **W11** between one and the other of the mounting frames **120** is set to be larger than the maximum width **W12** of the movable housing portion **112.**

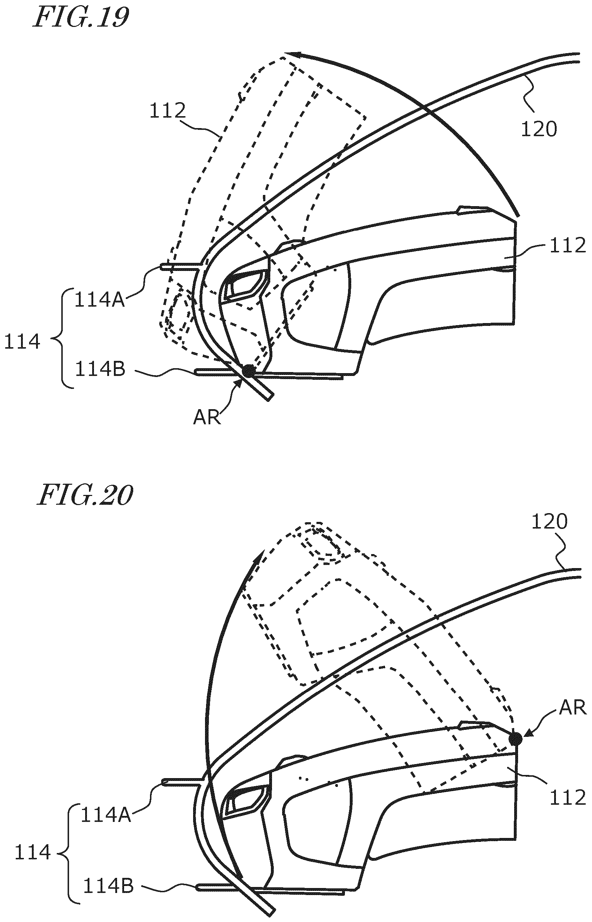

Referring to FIGS. **19** and **20,** the position and shape of the connecting bar **114** in this example will be described. FIG. **19** is a side view schematically showing the movable range of the movable housing portion **112** in a form where the rotation axis **AR** is positioned at the front of the movable housing portion **112.** In contrast, FIG. **20** is a side view schematically showing the movable range of the movable housing portion **112** in a form where the rotation axis **AR** is located at the rear of the movable housing portion **112.** In FIGS. **19** and **20,** the movable housing portion **112** shown by solid lines is in the "closed state," and the movable housing portion **112** shown by dotted lines is in the "open state." In each figure, the position of the rotation axis **AR** perpendicular to the paper plane is indicated by a black dot. The rotational motion of the movable housing portion **112** when changing from the "closed state" to the "open state" is schematically shown by solid arrows.

The connecting bar **114** connecting the left and right mounting frames **120** is placed outside the movable range of the movable housing portion **112.** In the example of FIG. **19,** the connecting bars **114** (connecting bars **114A,** and **114B)** are positioned in front of the movable housing portion **112** when the front housing **110** is in the "open state," thereby having shapes that do not interfere with the movable housing portion **112.**

In this example, the connecting bars **114** have shapes that protrude convexly forward in the plan view of FIG. **14.** Therefore, when the movable housing portion **112** has a curved shape that is highest at the center of its upper surface, the connecting bars **114** can efficiently provide a space that appropriately accommodates the movable housing portion **112** in the "open state."

As shown in FIGS. **14, 19,** and **20,** the connecting bar **114A** at a relatively high position protrudes farther forward than the connecting bar **114B** at a relatively low position. This configuration allows for increasing the angle (movable angle) that defines the movable range of the movable housing portion **112** in the configuration example shown in FIG. **19.** In the configuration example shown in FIG. **20,** because the position of the rotation axis **AR** is high, the frontmost point of the movable range of the movable housing portion 112 also rises to a relatively high position, but it is possible to appropriately isolate the upper connecting bar **114A** from the movable range.

The two connecting bars **114A** and **114B** in this example also serve to reduce or prevent collision of the front housing **110** with an obstacle and protect the front housing **110** when, for example, the front of the front housing **110** approaches some obstacle during travel. A third connecting bar may be provided at a position outside the movable range of the movable housing portion **112** shown in FIGS. **19** and **20.**

In this example, because the fixed housing portion **111** is positioned behind the movable housing portion **112,** the movable housing portion **112** is positioned forward by the length of the fixed housing portion **111** in the front-back direction of the vehicle frame **102.** When, for example, the front frame and the front housing in an existing agricultural tractor are adopted without changing each length as the front frame **102A** and the movable housing portion **112,** the position of the front end of the movable housing portion **112** relative to the front end position of the front frame **102A** shifts forward by the length of the fixed housing portion **111** described above. Therefore, in such case, it is particularly desirable to adopt the above configuration to ensure that the connecting bar **114** does not interfere with the movable housing portion **112.** Additionally, it is also preferable to set the position where the mounting frame **120** and the connecting bars **114A** and **114B** are connected and fixed relatively forward. The mounting frame **120** in this example is curved to protrude forward, as shown in FIGS. **19** and **20,** for example, but this has the advantage of making it easier to provide the connecting bar **114** in a position that does not interfere with the movable housing portion **112.**

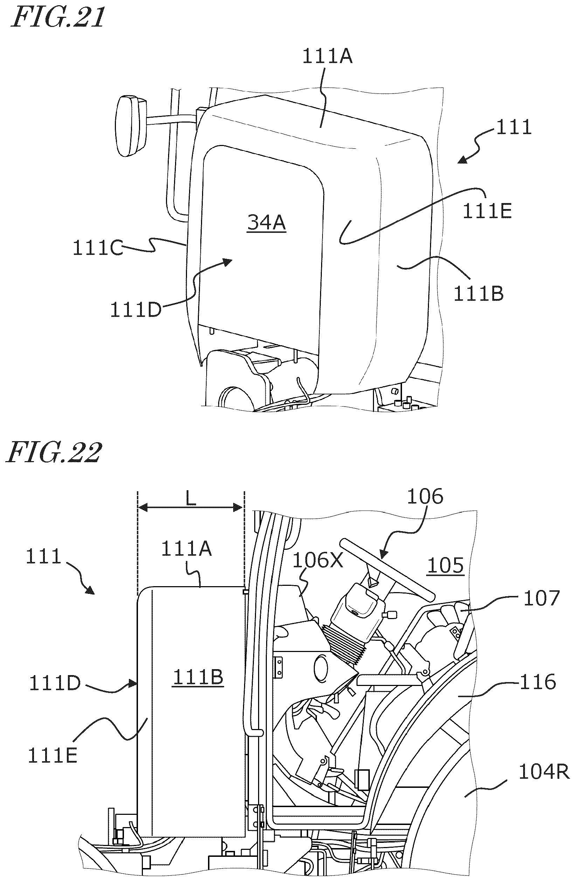

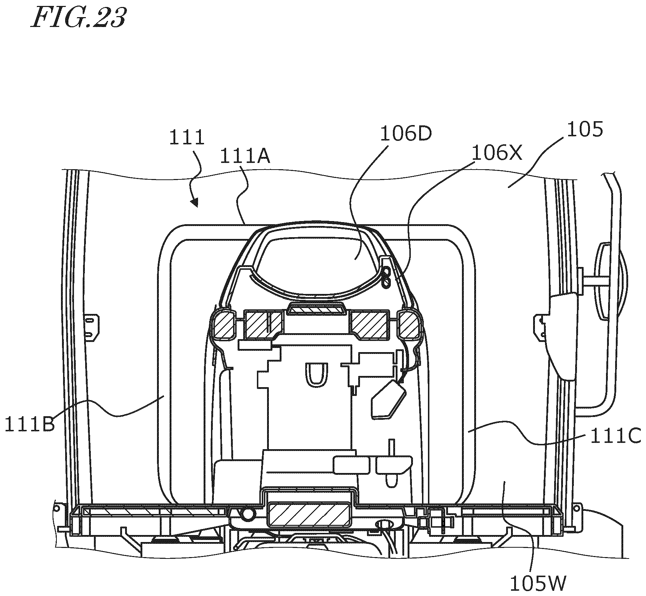

Next, referring to FIGS. **21** to **23,** an example configuration of the fixed housing portion **111** in this example will be described. FIGS. **21** and **22** are perspective and side views, respectively, of the fixed housing portion **111** in this example. FIG. **23** is a diagram showing the arrangement relationship between the fixed housing portion **111** and the handle stay cover **106X.** Note that the steering wheel is omitted in FIG. **23.**

The fixed housing portion **111** houses a component (in this example, the radiator device **34A**) that has a size exceeding a capacity of the movable housing portion **112.** It is preferable that the maximum width inside the fixed housing portion **111** is larger than the maximum width inside the movable housing portion **112.** The fixed housing portion **111** is positioned behind the movable housing portion **112.** When housing the radiator device **34A** inside the fixed housing portion **111,** an air cooling fan for the radiator device **34A** may also be housed inside the fixed housing portion **111.** This air cooling fan may face the back or front of the radiator device **34A.**

The fixed housing portion **111** in this example includes a top portion **111A,** a pair of side portions **111B** and **111C,** and a front wall **111E.** The front wall **111E** is located on the side of the movable housing portion **112** and includes an opening portion **111D** that communicates with the interior of the movable housing portion **112** in the closed state. Through this opening portion **111D,** components placed inside the fixed housing portion **111** and components placed inside the movable housing portion **112** can be connected by piping, coolant flow paths, electrical cables, and other similar connectors. The front wall **111E** faces the rear end of the movable housing portion **112** in the closed state. Therefore, the opening portion **111D** of the fixed housing portion **111** is blocked by the movable housing portion **112** in the closed state. However, there may be a gap between the movable housing portion **112** in the closed state and the fixed housing portion **111.** This gap allows the flow of air.

As shown in FIG. **22,** in front of the driver seat **107,** a handle stay cover **106X** with a steering wheel **106** is positioned. The fixed housing portion **111** is located in front of the handle stay cover **106X.** In FIG. **22,** the length **"L"** of the fixed housing portion **111** in the front-back direction of the vehicle frame **102** is shown. The fixed housing portion **111** with the length **L** is positioned between the movable housing portion **112** and the cabin **105.** As mentioned earlier, the front end of the movable housing portion 112 shifts forward by this length L.

As shown in FIG. **23,** when an operator seated in the driver seat inside the cabin **105** looks forward, the fixed housing portion **111** is positioned beyond the handle stay cover **106X.** The cabin **105** includes glass **105W** on all four sides surrounding the driver seat. Glass **105W** is positioned between the inside of the cabin **105** and the fixed housing portion **111.** The width of the fixed housing portion **111** is wider than the width of the handle stay cover **106X,** but the height of the fixed housing portion **111** is lower than the height of the handle stay cover **106X.** A display **106D** to display various information including vehicle speed is provided on the handle stay cover **106X.** The height of the fixed housing portion **111** may be designed to be no larger than the height of the handle stay cover **106X** so that the fixed housing portion **111** does not obstruct the forward view for the operator who alternately looks at the front of the agricultural tractor **300** and the display **106D.**

In this example, not the entire front housing **110** opens and closes, but rather a portion of the front housing **110** functions as a fixed housing portion **111,** while the remaining portion defines and functions as a movable housing portion **112.** This configuration reduces the difficulty of opening and closing operations that may arise when the front housing **110** becomes large, making it easier for operators to perform maintenance and other tasks. Especially when there are components too large to be accommodated in a typicalsized front housing, rather than increasing the size of the entire front housing that opens and closes larger, this configuration offers the advantage of not requiring enlargement of the opening and closing portion (movable housing portion) if such large components are housed in the fixed housing portion. While these advantages are particularly effective for work vehicles including a fuel cell power generation system, they are also effective for agricultural tractors comprising other drive systems. In other words, the benefit of dividing the so-called bonnet into a plurality of portions and making one of them capable of opening and closing operations is also effective for agricultural tractors including internal combustion engines or battery-driven motors.

### 5.2. Inverter Device

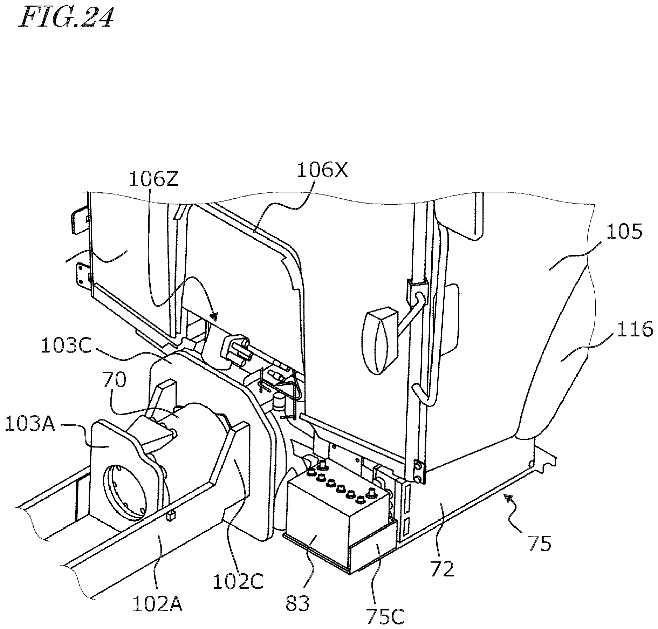

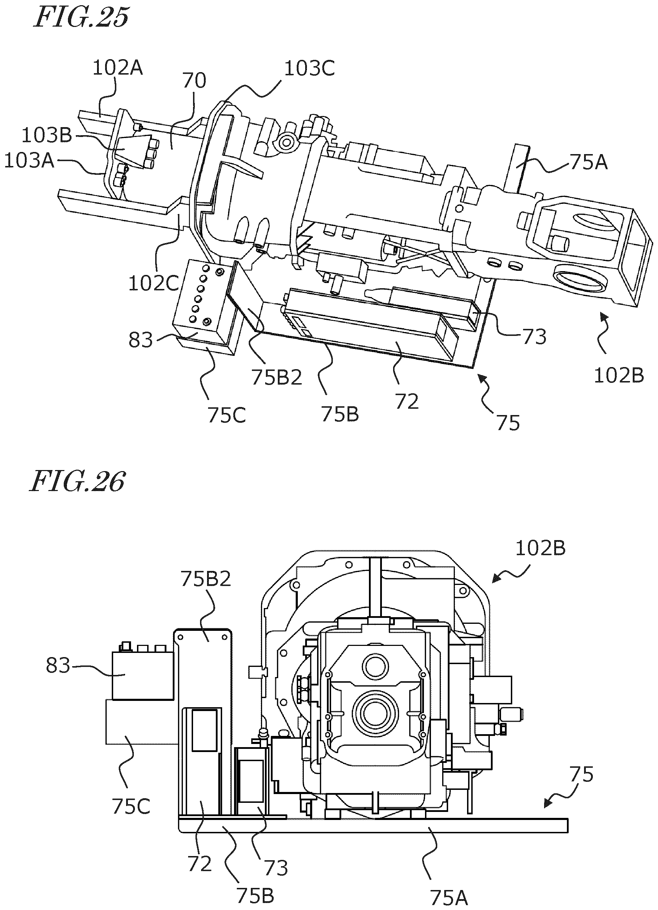

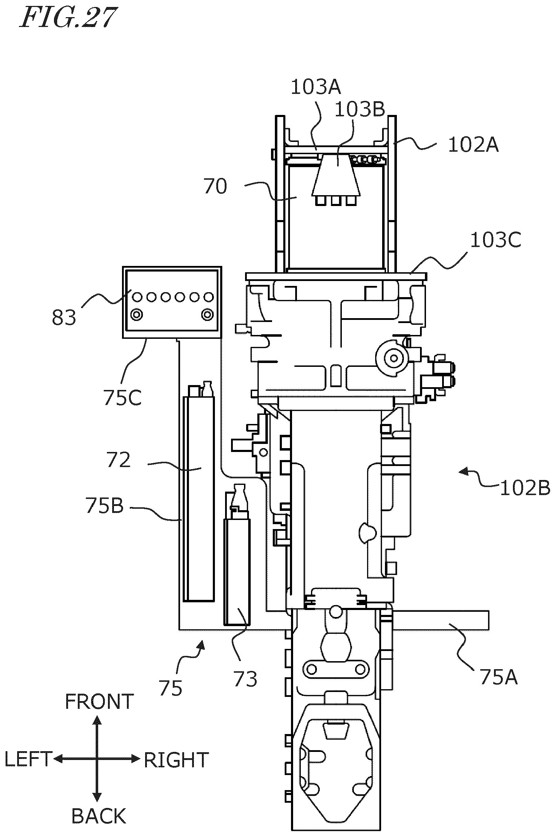

FIG. **24** is a perspective view showing the placement of the inverter device **72** in this example. In FIG. **24,** the description of the front housing (bonnet) **110** and the radiator device **34A** is omitted. FIG. **25** is a perspective view showing the arrangement relationship between the inverter device **72** and the transmission case **102B.** FIGS. **26** and **27** are rear and top views, respectively, showing the arrangement relationship between the inverter device **72** and the transmission case **102B.**

FIG. **24** shows the motor **70,** which would normally be difficult to see due to various components housed in the front housing **110.** Furthermore, FIG. **24** shows the front portion of the handle stay cover **106X** inside the cabin **105** and the lower end of the steering pipe **106Z** that rotatably supports the steering shaft.

The motor **70** is supported by the front frame **102A.** The rear end portion **102C** of the front frame **102A** is fixed to the front end portion **103C** of the transmission case **102B,** for example, by welding. The size in the height direction of the rear end portion **102C** of the front frame **102A** is enlarged compared to other portions of the front frame **102A,** aiming to improve the connection strength to the front end portion **103C** of the transmission case **102B.** Note that in FIG. **24,** the fixed housing portion **111** (not shown in FIG. **24**) previously mentioned is positioned above the motor **70** and in front of the handle stay cover **106X.**

The motor **70** is supplied with U-phase, V-phase, and W-phase alternating current from the inverter device **72.** In the example illustrated, the stator coil inside the motor **70** and the wiring from the inverter device **72** are connected via three-phase terminals **103B** provided on the motor fixing part **103A.** A sensor to detect the rotation of the rotor is provided in the motor **70.** The sensor is connected to an unillustrated motor control circuit. The output (power) of the motor **70** can be determined to the require amplitude depending on the size, weight, and application of the work vehicle.

The output shaft of the motor **70** is connected to the main shaft of the transmission device such as a transmission housed in the transmission case **102B.** The internal configuration of the transmission case **102B** can be similar to the configuration of the transmission device in a known agricultural tractor. An example of the transmission device is disclosed in International Publication No. WO 2022/038860, the entire contents of which are incorporated herein by reference.

In this example, the inverter device **72** is disposed on the side of the transmission case **102B** and is positioned below the cabin **105.** More specifically, a support **75** supporting the inverter device **72** is fixed to the transmission case **102B.** The support **75** includes a first portion **75A** connected to the lower portion of the transmission case **102B** and a second portion **75B** extending parallel to the transmission case **102B** in the plan view of FIG. **27.** The inverter device **72** is disposed on the second portion **75B.** By using this support **75,** it is possible to effectively utilize the free space provided under the cabin **105** to accommodate the inverter device **72.**

In this example, the inverter device **72** is placed close to the motor **70,** which is positioned near the front end portion **103C** of the transmission case **102B.** Therefore, it is possible to shorten the length of the wiring connecting the inverter device **72** and the motor **70.** The inverter device **72** includes semiconductor switches such as a plurality of power transistors, which tend to generate heat and become hot during operation. By positioning the inverter device **72** below the cabin **105** rather than housing it in the front housing **110,** as in this example, it is also possible to promote heat dissipation from the inverter device **72.**

In this example, components (e.g., electronic components such as capacitors) **73** other than the inverter device **72** may be mounted on the second portion **75B** of the support **75.** Additionally, the support **75** includes a third portion **75C** that supports electrical equipment other than the inverter device **72.** The third portion **75C** is fixed to an extension portion **75B2** that is vertically bent upward at the front end of the second portion **75B.** In the plan view of FIG. **27,** the third portion **75C** of the support **75** is positioned in front of the second portion **75B.** A storage battery **83** is positioned on the third portion **75C.**

As shown in FIG. **24,** in a plan view looking down from directly above, at least a portion of the upper surface of the storage battery **83** is exposed and is in a position that does not overlap with the cabin **105.** Furthermore, as shown in FIG. **26,** the third portion **75C,** on which the storage battery **83** is placed, is at a higher position than the second portion **75B.** By adopting this configuration, it is easy for the operator to access the storage battery **83.** According to this example, it is easy for the operator to perform necessary tasks for maintenance of the storage battery **83,** such as liquid replacement, thus increasing work efficiency.

Other components may be placed on the third portion **75C** instead of, or along with, the storage battery **83.** The height difference between the second portion **75B** and the third portion **75C** can be determined to make it easy for the operator to work on the components placed on the third portion **75C.**

## 5.3. Electrical Circuit Module

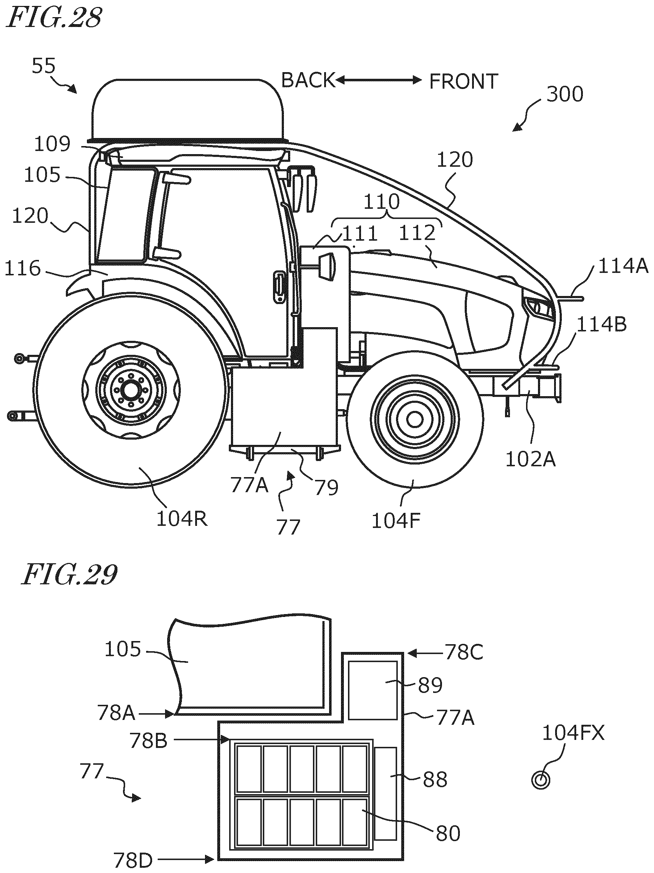

Next, referring to FIGS. **28** and **29,** an example configuration of the electrical circuit module equipped in the agricultural tractor of this example will be described. FIG. **28** is a side view showing the electrical circuit module **77** in this example, and FIG. **29** is a diagram schematically showing the configuration of the electrical circuit module **77.**

The agricultural tractor **300** in this example includes an electrical circuit module **77** housed in a casing **77A,** and the electrical circuit module **77** is positioned on the side of the vehicle frame **102.** In other words, the electrical circuit module **77** is positioned on one side of the vehicle frame **102** and the inverter device **72** is positioned on the other side of the vehicle frame **102.** More specifically, in this example, the electrical circuit module **77,** which includes circuits electrically connected to the FC module **10** and the motor **70,** is fixed to the right side of the vehicle frame **102** sandwiched between the front wheels **102F** and the rear wheels **102R** (see FIG. **14**). Specifically, the casing **77A** of the electrical circuit module **77** is supported by a support **79** fixed to the transmission case **102B.** The support **79** may be fixed to the lower end of the transmission case **102B,** similar to the support **75** for the inverter device **72** described earlier. The support **75** and the support **79** may be integrally formed from the same metal structure.

The electrical circuit module **77** may include, for example, a plurality of battery packs **80,** a battery management unit **88,** and various electrical circuits **89** such as ECU or voltage conversion circuits placed inside the casing **77A.** The electrical circuits **89** may include circuits that define and function as part of the inverter device **72.**

In the side view of FIG. **28,** the casing **77A** of the electrical circuit module **77** has a shape that does not overlap with the cabin **105.** The casing **77A** in this example has an "L-shaped" form where two roughly cuboid shapes of different sizes are connected. The casing **77A** has a portion (a relatively small, roughly cuboid-shaped portion) higher than the lower end **78A** of the entrance to the cabin **105,** between the cabin **105** and the front wheel **104F.**

The upper end **78B** of the battery pack **80** inside the casing **77A** is at a lower position than the lower end **78A** of the entrance to the cabin **105.** The entire battery pack **80** is relatively heavy compared to other electrical circuit components, thus contributing to lowering the vehicle's center of gravity. On the other hand, the upper end **78C** of a portion the electrical circuits **89** is at a higher position than the lower end **78A** of the entrance to the cabin **105.** This configuration contributes to the efficient use of free space in the agricultural tractor. The lower end **78D** of the casing **77A** of the electrical circuit module **77** is at a lower position than the axle (front axle) **104FX** of the front wheel **104F.** This allows for expansion of the volume of the casing **77A.** Additionally, it is preferable that the support **79** is formed from a sturdy material so that it can function to protect the casing **77A.**

In this manner, the electrical circuit module **77** in this example is placed effectively utilizing the free space available in the agricultural tractor **300.** In a conventional agricultural tractor with an internal combustion engine as the power source, the space where liquid fuel tanks and similar components, would have been placed is not required in an agricultural tractor including an FC power generation system. Therefore, by positioning the electrical circuit module 77 in the free space where the fuel tank was, it is possible to efficiently house the necessary electrical circuits without increasing the vehicle length and width.

Note that to cool the electrical components inside the electrical circuit module **77,** in this example, the coolant flow path described with reference to FIG. **4** is also provided inside the casing **77A** of the electrical circuit module **77.**

According to this example, it is possible to integrate a group of circuits (a plurality of electronic components) within a specific area, thereby shortening the length of wiring needed to connect these electronic components. Shortening the wiring reduces electrical resistance and also reduces or prevents noise intrusion. Additionally, by positioning heavy electrical equipment such as battery packs below the cabin **105,** it is possible to lower the position of the vehicle's center of gravity, contributing to improved driving stability.

As described above, this disclosure includes work vehicles described in the following items.

[Item 1]

A work vehicle comprising:

a fuel cell;
at least one fuel tank to store fuel to be supplied to the fuel cell;
a motor connected to the fuel cell;
a vehicle frame that supports the fuel cell, the at least one fuel tank, and the motor, the vehicle frame rotatably supporting front wheels and rear wheels;
at least one enclosure housing the fuel cell and the at least one fuel tank; and
at least one fuel gas sensor inside the at least one enclosure.

[Item 2]

The work vehicle according to Item 1, wherein

the at least one enclosure includes a front housing that houses the fuel cell;
the front housing is supported by a front portion of the vehicle frame, and a width of the front housing is narrower than a wheel spacing of the front wheels.

[Item 3]

The work vehicle according to Item 2, wherein the at least one enclosure includes a tank case that houses the at least one fuel tank.

[Item 4]

The work vehicle according to Item 3, wherein the at least one fuel gas sensor includes:

a first sensor provided inside the front housing; and
a second sensor provided inside the tank case.

[Item 5]

The work vehicle according to Item 4, wherein, inside the front housing, the first sensor is positioned in an area where the fuel gas accumulates inside the front housing.

[Item 6]

The work vehicle according to Item 5, wherein the second sensor is positioned higher than the first sensor.

[Item 7]

The work vehicle according to Item 6, further comprising:
a valve system connected to the at least one fuel tank and inside the tank case;
the second sensor is higher than the valve system inside the tank case.

[Item 8]

The work vehicle according to any one of Items 3 to 7, wherein the tank case is behind and higher than the front housing.

[Item 9]

The work vehicle according to Item 8, further comprising:
a driver seat supported by the vehicle frame; and
a mounting frame fixed to the vehicle frame to support the tank case, the mounting frame extending across the driver seat.

[Item 10]

The work vehicle according to any one of Items 1 to 7, wherein the work vehicle is an agricultural machine.

[Item 11]

The work vehicle according to Item 10, further comprising a power take-off shaft driven by the motor.

[Item 12]

The work vehicle according to Item 11, further comprising a power take-off shaft driven by the motor.

## INDUSTRIAL APPLICABILITY

The technology of this disclosure can be applied to work vehicles such as agricultural tractors, riding field management vehicles, and vegetable transplanting machines.

## REFERENCE SIGNS LIST

**10:** Fuel cell module, **11:** FC stack, **34:** Radiator device, **40:** Boost circuit, **50:** Fuel tank, **51:** Tank case, **70:** Motor, **71:** Output shaft, **72:** Inverter device, **74:** Power transmission system, **76:** Power take-off (PTO) shaft, **80:** Battery pack, **81:** First DC-DC converter, **82:** Second DC-DC converter, **83:** Storage battery, **85:** Air conditioning compressor, **86:** Heater, **100:** Work vehicle, **102:** Vehicle frame, **102A:** Front frame, **102B:** Transmission case, **104:** Wheel, **104F:** Front wheel, **104R:** Rear wheel, **107:** Driver seat, **120:** Mounting frame

## Claims

**1.** A work vehicle comprising:

a fuel cell;
at least one fuel tank to store fuel to be supplied to the fuel cell;
a motor connected to the fuel cell;
a vehicle frame that supports the fuel cell, the at least one fuel tank, and the motor, the vehicle frame rotatably supporting front wheels and rear wheels;
at least one enclosure housing the fuel cell and the at least one fuel tank; and
at least one fuel gas sensor inside the at least one enclosure.

**2.** The work vehicle according to claim 1, wherein

the at least one enclosure includes a front housing that houses the fuel cell;
the front housing is supported by a front portion of the vehicle frame, and a width of the front housing is narrower than a wheel spacing of the front wheels.

**3.** The work vehicle according to claim 2, wherein the at least one enclosure includes a tank case that houses the at least one fuel tank.

**4.** The work vehicle according to claim 3, wherein the at least one fuel gas sensor includes:

a first sensor inside the front housing; and
a second sensor inside the tank case.

5. The work vehicle according to claim 4, wherein the first sensor is in an area where the fuel gas accumulates inside the front housing.

6. The work vehicle according to claim 5, wherein the second sensor is higher than the first sensor.

7. The work vehicle according to claim 6, further comprising:

a valve system connected to the at least one fuel tank and inside the tank case;
the second sensor is higher than the valve system inside the tank case.

8. The work vehicle according to any one of claims 3 to 7, wherein the tank case is behind and higher than the front housing.

9. The work vehicle according to claim 8, further comprising:

a driver seat supported by the vehicle frame; and
a mounting frame fixed to the vehicle frame to support the tank case, the mounting frame extending across the driver seat.

10. The work vehicle according to any one of claims 1 to 7, wherein the work vehicle is an agricultural machine.

11. The work vehicle according to claim 10, further comprising a power take-off shaft driven by the motor.

**FIG.1**

FRONT

LEFT ↔ RIGHT

BACK

100

10

104F

104F

102 { 102A
102B

70

71

74

50

104R

104R

76

**FIG.2**

FIG.3

*FIG.4*

FIG.5

FRONT ◄─────► BACK

*FIG.6A*

200    120    51A

120A    120B    120C

FRONT ◄──► BACK    10    107    70    128    102A    102B    129

102

104F    104R

104

*FIG.6B*

RIGHT

FRONT ◄──► BACK    200    104F    120    51A    120B    104R

LEFT    120A    120C    102B    107    10    120C    102A    70    120    120B    120A    104F    120    104R

FIG.7

LEFT ←——→ RIGHT

## FIG.8

FUEL STORAGE

COOLER

X

Y

## FIG.9A

FRONT ←——→ BACK

## FIG.9B

RIGHT ←——→ LEFT

*FIG.10*

*FIG.11*

## FIG.12

## FIG.13

## FIG.14

FIG.15

FIG.16

## FIG.17

FRONT ←→ BACK

300

120

112

114A

114 {

114B

102A

104F

10

111

77 79

55

109

105

120

116

104R

## FIG.18

FRONT ←→ BACK

300

112 120

132 130

10

111

114A

114 {

114B

102A

104F

77 79

55

109

105

120

116

104R

*FIG.19*

*FIG.20*

*FIG.21*

111A

111

111E

111C

34A

111B

111D

*FIG.22*

L

106

111

111A

106X

105

107

111D

111B

116

111E

104R

FIG.23

**FIG.24**

**FIG.25**

**FIG.26**

*FIG.27*

FRONT

LEFT ← → RIGHT

BACK

## FIG.28

55

109
105
120
116

BACK ← → FRONT

300

120

110
111  112

114A
114B

102A

77A  79
104R  77  104F

## FIG.29

105

78A

78B

77

78D

78C
89
77A

104FX

88

80

## INTERNATIONAL SEARCH REPORT

International application No.

**PCT/JP2023/023482**

### A. CLASSIFICATION OF SUBJECT MATTER

**B60K 1/00**(2006.01)i; **B60K 15/063**(2006.01)i; **B60K 15/07**(2006.01)i
FI:  B60K1/00; B60K15/063 B; B60K15/07

According to International Patent Classification (IPC) or to both national classification and IPC

### B. FIELDS SEARCHED

Minimum documentation searched (classification system followed by classification symbols)

B60K1/00; B60K15/063; B60K15/07

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-168886 A (SUZUKI MOTOR CORP) 15 October 2020 (2020-10-15) | 1 |
|  | paragraphs [0009]-[0061], fig. 1-6 | |
| Y | paragraphs [0009]-[0061], fig. 1-6 | 2-11 |
| Y | JP 2020-157924 A (YANMAR POWER TECHNOLOGY CO LTD) 01 October 2020 (2020-10-01) | 2-11 |
|  | paragraphs [0014]-[0030], fig. 1-8 | |
| A | JP 2008-265685 A (KANZAKI KOKYUKOKI MFG CO LTD) 06 November 2008 (2008-11-06) | 1-11 |
| A | US 2012/0100414 A1 (GM GLOBAL TECHNOLOGY OPERATIONS, INC.) 26 April 2012 (2012-04-26) | 1-11 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 July 2023** | **01 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/023482**

| Patent document cited in search report | | | Publication date (day/month/year) | Patent family member(s) | | | Publication date (day/month/year) |
|---|---|---|---|---|---|---|---|
| JP | 2020-168886 | A | 15 October 2020 | (Family: none) | | | |
| JP | 2020-157924 | A | 01 October 2020 | (Family: none) | | | |
| JP | 2008-265685 | A | 06 November 2008 | EP | 1985487 | A2 | |
| US | 2012/0100414 | A1 | 26 April 2012 | CN | 102456855 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002225577 A
- WO 2022038860 A